(19) Europäisches Patentamt
European Patent Office
Office européen des brevets

(11) **EP 1 812 855 B1**

(12) **EUROPÄISCHE PATENTSCHRIFT**

(45) Veröffentlichungstag und Bekanntmachung des Hinweises auf die Patenterteilung:
**07.01.2009 Patentblatt 2009/02**

(21) Anmeldenummer: **05801485.3**

(22) Anmeldetag: **25.10.2005**

(51) Int Cl.:
**G06F 11/16** *(2006.01)*

(86) Internationale Anmeldenummer:
**PCT/EP2005/055514**

(87) Internationale Veröffentlichungsnummer:
**WO 2006/045786 (04.05.2006 Gazette 2006/18)**

(54) **VERFAHREN UND VORRICHTUNG ZUR MODUSUMSCHALTUNG UND ZUM SIGNALVERGLEICH BEI EINEM RECHNERSYSTEM MIT WENIGSTENS ZWEI VERARBEITUNGSEINHEITEN**

METHOD AND DEVICE FOR MODE SWITCHING AND SIGNAL COMPARISON IN A COMPUTER SYSTEM COMPRISING AT LEAST TWO PROCESSING UNITS

PROCEDE ET DISPOSITIF POUR COMMUTER DES MODES ET POUR COMPARER DES SIGNAUX DANS UN SYSTEME DE CALCUL COMPRENANT AU MOINS DEUX UNITES DE TRAITEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.10.2004 DE 102004051950**
**25.10.2004 DE 102004051992**
**25.10.2004 DE 102004051964**
**25.10.2004 DE 102004051937**
**25.10.2004 DE 102004051952**
**08.08.2005 DE 102005037239**

(43) Veröffentlichungstag der Anmeldung:
**01.08.2007 Patentblatt 2007/31**

(73) Patentinhaber: **ROBERT BOSCH GMBH**
**70442 Stuttgart (DE)**

(72) Erfinder:
• **COLLANI, Yorck**
**71717 Beilstein (DE)**
• **GMEHLICH, Rainer**
**71254 Ditzingen (DE)**
• **BOEHL, Eberhard**
**72768 Reutlingen (DE)**

(56) Entgegenhaltungen:
EP-A- 0 384 177        DE-A1- 10 133 652
DE-A1- 19 809 089      US-A- 3 783 250
US-A- 4 733 353        US-A- 5 226 152
US-A1- 2004 186 979

**Beschreibung**

Stand der Technik

Ein Verfahren zur Erkennung von Fehlern in einem Vergleichsmodus ist in Wo 01/46806 A1 beschrieben. Dabei werden die Daten in einem Verarbeitungseinheit mit zwei Verarbeitungseinheiten ALUs parallel verarbeitet und verglichen. Bei einem Fehler (Soft-Error, transienter Fehler) arbeiten dort beide ALUs solange unabhängig voneinander, bis die fehlerhaften Daten entfernt sind und eine erneute (teilweise wiederholte) redundante Verarbeitung vorgenommen werden kann. Das setzt voraus, dass beide ALUs synchron zueinander arbeiten und die Ergebnisse taktgenau verglichen werden können.

Im Stand der Technik sind Verfahren bekannt, wie zwischen einem Vergleichsmodus zur Fehlererkennung, in dem Aufgaben redundant abgearbeitet werden, und einem Performanzmodus zur Erzielung einer höheren Leistungsfähigkeit umgeschaltet werden kann. Voraussetzung ist hier, dass die Verarbeitungseinheiten für den Vergleichsmodus gegenseitig synchronisiert werden. Dazu ist es notwendig, dass beide Verarbeitungseinheiten angehalten werden können und taktgenau synchron arbeiten, um die Ergebnisdaten beim Schreiben in den Speicher miteinander vergleichen zu können. Dazu sind Eingriffe in die Hardware notwendig, einzelne Lösungen werden vorgeschlagen.

In der Patentschrift EP 0969373 A2 wird dem gegenüber ein Vergleich der Ergebnisse von redundant arbeitenden Verarbeitungseinheiten oder Verarbeitungseinheiten auch dann gewährleistet, auch wenn diese asynchron zueinander arbeiten, d.h. nicht taktgleich oder mit einem unbekannten Taktversatz.

Aus der Flugzeugindustrie sind Votingsysteme bekannt, die Inputs von Standardrechnem verwenden können und diese durch einen Mehrheitsentscheid sicher verarbeiten und damit sicherheitsrelevante Aktionen auslösen können. Ein System, das inter-Verarbeitungseinheit und inter-Control-Unit Kommunikation miteinander kombiniert, ist das FME-System, bei dem durch einen hohen Grad von Redundanz auch im Falle von einzelnen oder gar mehreren Fehlern das System noch arbeitsfähig bleibt und von der DASA für die Raumfahrt entwickelt wurde (Urban, et al: A survivable avioncs system for space applications, Int. Symposium on Fault-tolerant Computing, FTCS-28 (1998),pp.372-381). Dieses System kann sogar byzantinische Fehler (d.h. besonders bösartige Fehler, bei denen nicht alle Komponenten die gleiche Informationen erhalten, sondern von einem Intriganten sogar "vorsätzlich" unterschiedlich falsche Informationen an verschiedene Komponenten verteilt werden) tolerieren. Ein solches System ist wegen des hohen Aufwandes kommerziell anwendbar für besonders kritische Systeme, die in sehr geringen Stückzahlen gefertigt werden. Eine kostengünstige Lösung, die in großen Stückzahlen herstellbar ist und zusätzlich noch Umschaltmöglichkeiten besitzt, ist nicht bekannt. Es besteht deshalb die Aufgabe, eine Umschalt- und Vergleichseinheit zu schaffen, die es erlaubt, den Betriebsmodus von zwei oder mehreren Verarbeitungseinheiten umzuschalten und dabei ohne Eingriffe in die Struktur dieser Verarbeitungseinheiten auskommt und auch keinen zusätzlichen Signale zu diesem Zweck benötigt. Dabei soll es möglich sein, verschiedene digitale oder analoge Signale von verschiedenen Verarbeitungseinheiten in einem Vergleichmodus gegenseitig zu vergleichen. Dabei soll dieser Vergleich unter Umständen auch dann möglich sein, wenn die Verarbeitungseinheiten mit verschiedenen Taktsignalen betrieben werden und nicht synchron zueinander arbeiten. Es besteht darüber hinaus die Aufgabe, Mittel und Verfahren zur Verfügung zu stellen, die eine Synchronisation auch ohne Hardwareeingriffe ermöglichen.

In der Patentschrift D1 = US-A-3 783 250 ist bereits eine Vorrichtung, mit der ein Vergleich der Bearbeitungsergebnisse mehrerer Rechner erfolgt. Dabei wird durch eine Zwischenspeicherung auch ein Zeitversatz von bis zu einem halben Datenwort ausgeglichen. Es wird jedoch keine Asynchronität ermittelt und es wird auch kein Synchronisationssignal in Abhangigkeit vom Ausmaß der Asynchronität an einen der beteiligten Rechner gegeben.

In der Patentschrift D2 = DE-A1-198 09 089 sind mehrere Rechner bekannt, die sich untereinander für einen Vergleich synchronisieren. Jeweils bei Erreichen eines Zwischenergebnisses werden die Rechner gestoppt, bis alle Rechner das Zwischenergebnis liefern. Es erfolgt somit keine Ermittlung einer Asynchronität und es wird auch nicht in Abhängigkeit vom Ausmaß der Asynchronität ein Rechner angehalten.

Vorteile

Vorteilhafterweise verwendet man ein Verfahren zur Umschaltung bei einem Rechnersystem mit wenigstens zwei Verarbeitungseinheiten, einem Umschaltmittel und einem Vergleichsmittel, wobei zwischen wenigstens zwei Betriebsmodi umgeschaltet wird und ein erster Betriebsmodus einem Vergleichsmodus und ein zweiter Betriebsmodus einem Performanzmodus entspricht, wobei im Vergleichsmodus Informationen verglichen werden, dadurch gekennzeichnet, dass die Daten für den Vergleich zwischengespeichert werden, dass eine Asynchronitätsinformation der wenigstens zwei Verarbeitungseinheiten ermittelt wird, und dass ein Synchronisationssignal auf einen Unterbrechungseingang wenigstens einer der Verarbeitungseinheiten gelegt wird, wenn die Asynchronitätsinformation im Vergleichsmodus einen Schwellwert überschreitet.

Vorteilhafterweise verwendet man ein Verfahren, bei dem es sich bei dem Synchronisationssignal um ein Verzögerungssignal, insbesondere ein Wait-Signal, handelt.

Vorteilhafterweise verwendet man ein Verfahren, bei dem durch das Synchronisationssignal wenigstens eine Verarbeitungseinheit veranlasst wird, keine Information mehr zu verarbeiten.

Vorteilhafterweise verwendet man ein Verfahren, bei dem die wenigstens eine Verarbeitungseinheit für eine vorgebbare Zeit veranlasst wird, keine Information mehr zu verarbeiten.

Vorteilhafterweise verwendet man ein Verfahren, bei dem das Synchronisationssignal gegenüber wenigstens einem Unterbrechungssignal eine höhere Priorität besitzt.

Vorteilhafterweise verwendet man ein Verfahren, bei dem das Synchronisationssignal gegenüber allen Unterbrechungssignalen die höchste Priorität besitzt.

Vorteilhafterweise verwendet man ein Verfahren, bei dem durch das Synchronisationssignal wenigstens eine Verarbeitungseinheit dazu veranlasst wird, eine Unterbrechungsroutine abzuarbeiten.

Vorteilhafterweise verwendet man ein Verfahren, bei dem wenigstens ein Pufferspeicher enthalten ist und wenigstens eine der im Vergleichsmodus zu vergleichenden Informationen für eine vom Synchronisationssignal abhängige Zeit in dem Pufferspeicher zwischengespeichert wird.

Vorteilhafterweise verwendet man ein Verfahren, bei dem aus der Zeit für die wenigstens eine der Informationen zwischengespeichert wird, eine Asynchronitätsinformation, insbesondere ein Zeitfehler, ermittelbar ist.

Vorteilhafterweise verwendet man ein Verfahren, bei dem bei dem Pufferspeicher ein Füllstand des Speichers ermittelbar ist, der anzeigt welche Anzahl an Informationen sich im Pufferspeicher befinden.

Vorteilhafterweise verwendet man ein Verfahren, bei dem der Zeitfehler dadurch ermittelt wird, dass ein Zeiterfassungsmittel, insbesondere ein Zählelement, vorgesehen ist, wobei ein Zeitwert ermittelt wird und dieser mit einem vorgebbaren maximalen Zeitwert verglichen wird.

Vorteilhafterweise verwendet man ein Verfahren, bei dem eine Asynchronitätsinformation dadurch ermittelt wird, dass der ermittelte Füllstand mit einem vorgebbaren maximalen Füllstand verglichen wird.

Vorteilhafterweise verwendet man ein Verfahren, bei dem eine Vorgabe, dass ein nächstes Ausgangsdatum verglichen werden soll, durch ein Vergleichssignal erfolgt.

Vorteilhafterweise verwendet man ein Verfahren, bei dem einem Datum, das verglichen werden soll, eine Kennung zugeordnet wird, durch die der Vergleich ausgelöst wird

Vorteilhafterweise verwendet man eine Vorrichtung zur Umschaltung bei einem Rechnersystem mit wenigstens zwei Verarbeitungseinheiten, wobei die Vorrichtung ein Umschaltmittel und ein Vergleichsmittel enthält und zwischen wenigstens zwei Betriebsmodi umgeschaltet wird und ein erster Betriebsmodus einem Vergleichsmodus und ein zweiter Betriebsmodus einem Performanzmodus entspricht, wobei im Vergleichsmodus Informationen verglichen werden, dadurch gekennzeichnet, dass wenigstens ein Pufferspeicher vorgesehen ist, dass die Vorrichtung derart ausgestaltet ist, dass eine Asynchronitätsinformation der wenigstens zwei Verarbeitungseinheiten ermittelt wird, und dass im Vergleichsmodus ein Synchronisationssignal auf einen Unterbrechungseingang wenigstens einer der Verarbeitungseinheiten gelegt wird, wenn die Asynchronitätsinformation im Vergleichsmodus einen Schwellwert überschreitet.

Vorteilhafterweise verwendet man eine Vorrichtung, bei der die Vergleichsmittel und die Umschaltmittel baulich extern zu den Verarbeitungseinheiten vorgesehen sind

Vorteilhafterweise verwendet man eine Vorrichtung, bei der wenigstens ein Pufferspeicher vorgesehen ist.

Vorteilhafterweise verwendet man eine Vorrichtung, bei der es sich bei dem Pufferspeicher um einen FIFO Speicher handelt.

Vorteilhafterweise verwendet man eine Vorrichtung, bei der jeder Verarbeitungseinheit ein Pufferspeicher zugeordnet ist.

Vorteilhafterweise verwendet man eine Vorrichtung, bei der jeder Verarbeitungseinheit eine Pufferspeicher, insbesondere ein FIFO Speicher zugeordnet ist.

Vorteilhafterweise verwendet man eine Vorrichtung, bei der Mittel, insbesondere ein Zählelement, vorgesehen sind, welche derart ausgestaltet sind, dass diese aus der vorgebbaren und/oder ermittelbaren Zeit für die wenigstens eine der Informationen zwischengespeichert wird eine Asynchronitätsinformation, insbesondere einen Zeitfehler, ermitteln.

Vorteilhafterweise verwendet man eine Vorrichtung, bei der Mittel vorgesehen sind, welche derart ausgestaltet sind, dass diese bei dem Pufferspeicher einen Füllstand des Speichers ermitteln, der anzeigt welche Anzahl an Informationen sich im Pufferspeicher befinden.

Vorteilhafterweise verwendet man eine Vorrichtung, bei der die Mittel derart ausgestaltet sind, dass diese eine Asynchronitätsinformation dadurch ermitteln, dass der ermittelte Füllstand mit einem vorgebbaren maximalen Füllstand verglichen wird.

Vorteilhafterweise verwendet man eine Vorrichtung, bei der Synchronisationsmittel vorgesehen sind, die derart ausgestaltet sind, dass diese abhängig von der Asynchronitätsinformation eine Synchronisationsinformation erzeugen.

Vorteilhafterweise verwendet man eine Vorrichtung, bei der ein Überwachungsmittel vorgesehen ist, welches derart ausgestaltet ist, dass dieses die Asynchronitätsinformation verarbeitet.

Vorteilhafterweise verwendet man eine Vorrichtung, bei der es sich bei dem Überwachungsmittel um ein zum Rechnersystem externes Überwachungsmittel, insbesondere einen Watchdog, handelt.

Weitere Vorteile und vorteilhafte Ausgestaltungen ergeben sich aus den Merkmalen der Ansprüche sowie der Beschreibung.

Figuren

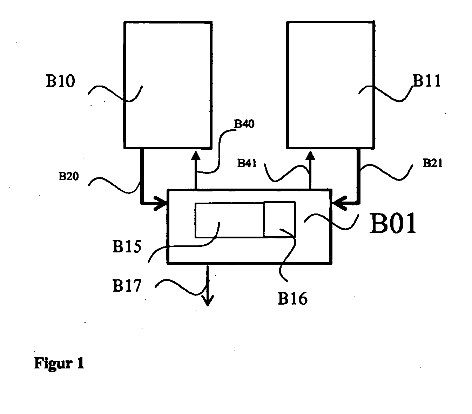

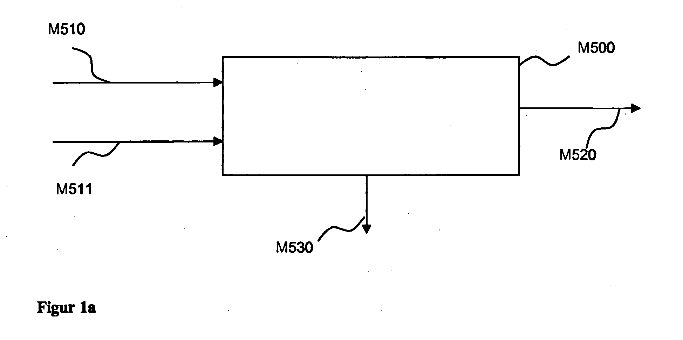

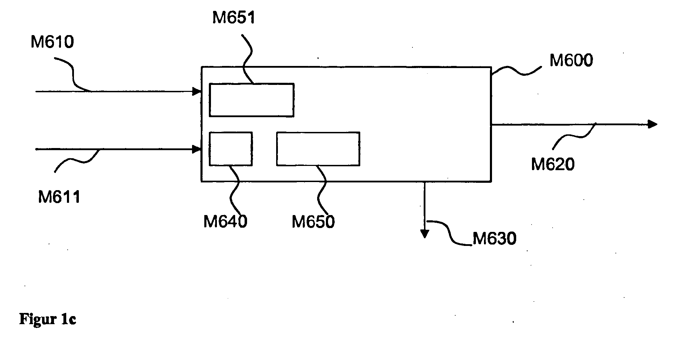

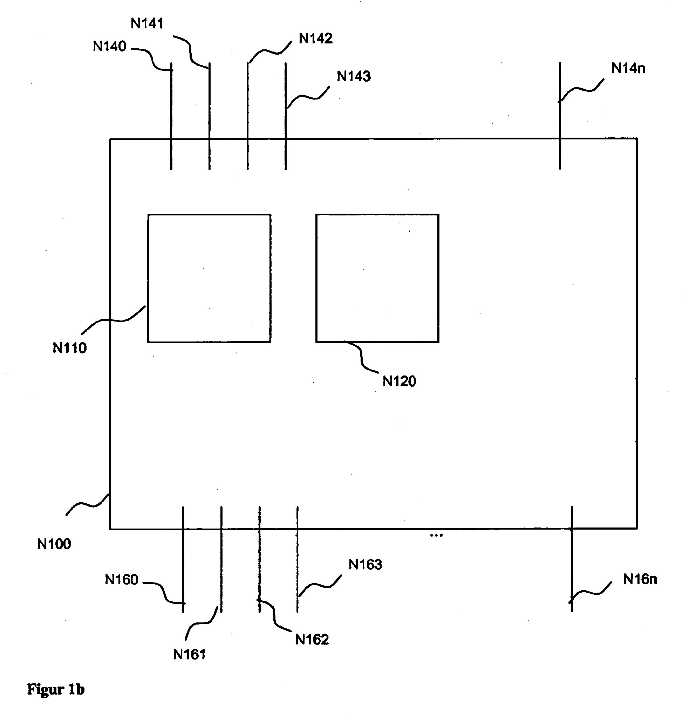

Figur 1 zeigt die Grundfunktion einer Umschalt- und Vergleichseinheit für zwei Verarbeitungseinheiten

Figur 1a zeigt eine verallgemeinerte Darstellung eines Vergleichers

Figur 1c zeigt eine erweiterte Darstellung eines Vergleichers

Figur 1b zeigt eine verallgemeinerte Darstellung einer Umschalt- und Vergleichseinheit

Figur 2 zeigt eine detailliertere Darstellung der Umschalt-und Vergleichseinheit für zwei Verarbeitungseinheiten

Figur 3 zeigt eine mögliche Realisierung einer Umschalt- und Vergleichseinheit für zwei Verarbeitungseinheiten

Figur 4 zeigt eine mehr detaillierte Dartstellung einer Umschalt- und Vergleichseinheit für mehr als zwei Verarbeitungseinheiten

Figur 5 zeigt eine mögliche Realisierung einer Umschalt- und Vergleichseinheit für mehr als zwei Verarbeitungseinheiten

Figur 6 zeigt eine mögliche Realisierung eines Controlregisters

Figur 7 zeigt eine Votingeinheit für zentrales Voting

Figur 8 zeigt eine Votingeinheit für dezentrales Voting

Figur 9 zeigt ein Synchronisationselement

Figur 10 zeigt ein Handshake-Interface

Figur 11 zeigt einen Differenzverstärker

Figur 12 zeigt einen Komparator für positive Spannungsdifferenz

Figur 13 zeigt einen Komparator für negative Spannungsdifferenz

Figur 14 zeigt eine Schaltung zur Speicherung eines Fehlers

Figur 15 zeigt einen Analogz-zu-Digitalkonverter mit Ausgangsregister

Figur 16 zeigt die Darstellung eines digitalgewandelten Analogwertes mit Kenung und Analogbit

Figur 17 zeigt die Darstellung eines Digitalwertes als Digitalwort mit Digitalbit

Beschreibung der Ausführungsbeispiele

Eine Ausführungseinheit oder Verarbeitungseinheit kann im Folgenden sowohl einen Prozessor/Core/CPU, als auch eine FPU (Floating Point Unit), DSP (Digitaler Signalprozessor), Coprozessor oder ALU (Arithmetic logical Unit) bezeichnen.

Es wird ein System von zwei oder mehr Verarbeitungseinheiten betrachtet. Grundsätzlich gibt es in sicherheitsrelevanten Systemen die Möglichkeit, solche Ressourcen entweder zur Erhöhung der Leistungsfähigkeit zu verwenden, in dem man die verschiedenen Verarbeitungseinheiten möglichst mit verschiedenen Aufgaben versorgt. Alternativ kann man einige der Ressourcen auch redundant zueinander verwenden, indem man sie mit der gleichen Aufgabe versorgt und bei ungleichem Resultat auf einen Fehler erkennt.

Je nachdem, wie viele Verarbeitungseinheiten es gibt, sind mehrere Modi denkbar. In einem Zweier-System existieren die beiden Modi "Vergleich" und "Performanz", wie oben beschrieben. In einem Dreier-System kann man neben dem reinen Performanz-Modus, in dem alle drei Verarbeitungseinheiten parallel arbeiten, und dem reinen Vergleichsmodus, in dem alle drei Verarbeitungseinheiten redundant rechnen und verglichen wird, auch einen 2aus3-Voting Modus realisieren, in dem alle drei Verarbeitungseinheiten redundant rechnen und eine Majoritätsauswahl vorgenommen wird. Weiter kann man auch einen gemischten Modus realisieren, bei dem z.B. zwei der Verarbeitungseinheiten redundant zueinander rechnen und die Ergebnisse verglichen werden, während die dritte Verarbeitungseinheit eine andere, parallele Aufgabe bearbeitet. In einem vier-oder mehr-Verarbeitungseinheiten System sind offensichtlich noch weitere Kombinationen denkbar.

Die zu lösende Aufgabe ist es, dass die zur Verfügung stehenden Verarbeitungseinheiten in einem System im Betrieb variabel eingesetzt werden können, ohne einen Eingriff in die bestehende Struktur dieser Verarbeitungseinheiten (z.B. zu Synchronisationszwecken) notwendig zu machen. In einer speziellen Ausführung soll jede Verarbeitungseinheit mit einem eigenen Takt arbeiten können, d.h. die Abarbeitung gleicher Aufgaben zum Zwecke des Vergleichs auch asynchron zueinander abarbeiten können.

Diese Aufgabe wird dadurch gelöst, dass ein universelles, breit einsetzbares IP geschaffen wird, das eine Umschaltung der Betriebsmodi (z.B. Vergleichs-, Performanz- oder Voting Modus) zu beliebigen Zeitpunkten ohne vorheriges Abschalten der Verarbeitungseinheiten ermöglicht und den Vergleich oder das Voting der zueinander möglicherweise asynchronen Datenströme managt. Dieses IP kann als Chip ausgeführt werden, oder es kann zusammen mit einer oder mehreren Verarbeitungseinheiten auf einem Chip integriert werden. Weiter ist es nicht Voraussetzung, dass dieser Chip nur aus einem Stück Silizium besteht, es ist durchaus auch möglich, dass dieses aus getrennten Bausteinen realisiert wird.

Um die Synchronität zwischen unterschiedlichen Verarbeitungseinheiten zu gewährleisten, sind Signale notwendig, die eine ständig weitergehende Programmabarbeitung einzelner Verarbeitungseinheiten verhindern. Dazu ist üblicherweise ein WAIT-Signal vorgesehen.

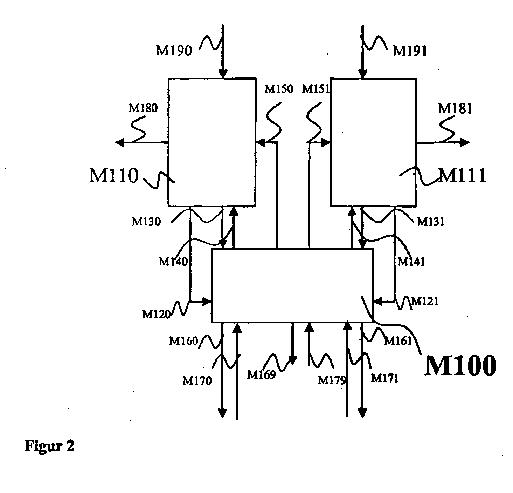

Falls eine Ausführungseinheit nicht über ein Wait-Signal verfügt kann sie auch über einen Interrupt synchronisiert werden. Dazu wird das Synchronisationssignal (z.B. M140 in Figur 2) nicht an einen Wait-Eingang geführt, sondern auf einen Interrupt gelegt. Dieser Interrupt muss eine genügend hohe Priorität gegenüber dem Verarbeitungsprogramm und auch gegenüber anderen Interrupts haben, um die normale Arbeitsweise zu unterbrechen. Die zugehörige Interrupt-Routine führt nur eine bestimmte Anzahl von NOPs (Leerbefehle ohne Auswirkung auf Daten) aus, bevor wieder in das unterbrochene Programm zurückgesprungen wird, und verzögert damit die weitere Abarbeitung des Verarbeitungsprogramms. Gegebenenfalls müssen in der Interruptroutine noch die üblichen Speicheroperationen am Anfang und am Ende vorgenommen werden, um die normale Programmabarbeitung nicht durch den Interrupt zu beeinträchtigen.

Dieser Vorgang wird solange fortgesetzt, bis die Synchronität hergestellt wurde (z.B. liefern andere Verarbeitungseinheiten die erwarteten Vergleichsdaten ab). Eine genaue Taktsynchronität und insbesondere Phasengleichheit mit anderen Verarbeitungseinheiten kann jedoch mit diesem Verfahren nur bedingt garantiert werden. Es ist deshalb zu empfehlen, dass bei einer Benutzung des Interrupt-Signals zur Synchronisation die zu vergleichenden Daten in der UVE zwischengespeichert werden, bevor sie verglichen werden.

Der Vorteil der Erfindung ist, dass beliebige kommerziell verfügbare Standard-Strukturen eingesetzt werden können, weil keine zusätzlichen Signale benötigt werden (keine Eingriffe in die Hardwarestruktur) und beliebige Ausgangssignale dieser Komponenten überwacht werden können, die beispielsweise direkt zur Ansteuerung von Aktoren verwendet werden. Das schließt die Überprüfung von Wandlerstrukturen wie DACs und PWMs mit ein, die bisher nach dem Stand der Technik so nicht direkt durch einen Vergleich prüfbar sind.

Sofern die Überprüfung für einzelne Aufgaben oder SW-Tasks nicht benötigt wird, ist aber auch eine Umschaltung in einen Performanzmodus möglich, in dem unterschiedliche Tasks auf verschiedene Verarbeitungseinheiten verteilt werden.

Ein weiterer Vorteil ist es, dass in einem Vergleichs- oder Votingmodus nicht alle Daten verglichen werden müssen. Nur die zu vergleichenden oder zu votenden Daten werden in der Umschalt- und Vergleichseinheit zueinander synchronisiert.

Die Auswahl dieser Daten ist durch das gezielte Ansprechen der Umschalt- und Vergleichseinheit variabel (programmierbar) und kann an die jeweilige Verarbeitungseinheitarchitektur sowie an die Anwendung angepasst werden. Damit ist auch die Verwendung von diversitären μC oder Softwareteilen leicht möglich, da nur Ergebnisse, die sinnvollerweise verglichen werden können, tatsächlich auch verglichen werden.

Weiter kann jeder Zugriff zu einem (z.B. externen) Speicher damit überwacht werden oder auch nur die Ansteuerung externer I/O Module. Interne Signale können über die softwaregesteuerte zusätzliche Ausgabe zum Umschaltmodul auf dem externen Daten- und/oder Adressbus geprüft werden.

Alle Steuersignale für die Vergleichsoperationen werden in der vorzugsweise programmierbaren Umschalt- und Voting-Einheit erzeugt und der Vergleich findet auch dort statt. Die Verarbeitungseinheiten (z.B. Prozessoren), deren Ausgaben miteinander verglichen werden sollen, können das gleiche Programm benutzen, ein dupliziertes Programm (was zusätzlich die Erkennung von Fehlern beim Speicherzugriff ermöglicht) oder auch ein diversifiziertes Programm zur Erkennung von Software-Fehlern. Dabei müssen nicht alle von den Verarbeitungseinheiten bereitgestellten Signale miteinander verglichen werden, sondern es ist auch möglich, mittels einer Kennung (Adress- oder Steuersignale) bestimmte Signale für den Vergleich vorzusehen oder auch nicht. Diese Kennung wird in der Umschalt- und Vergleicheinrichtung ausgewertet und damit der Vergleich gesteuert

Separate Timer überwachen Abweichungen im Zeitverhalten über ein vorgebbares Limit hinaus. Einige oder auch alle Module der Umschalt- und Vergleicheinheit können auf einem Chip integriert sein, auf einem gemeinsamen Board oder auch räumlich getrennt untergebracht sein. Im letzteren Fall werden die Daten und Steuersignale über geeignete Bussysteme miteinander ausgetauscht. Register vor Ort werden dann über das Bussystem beschrieben und steuern die Vorgänge mittels der darin abgespeicherten Daten und/oder Adressen/Steuersignale.

In Figur 1 ist die Grundfunktion der erfindungsgemäßen Umschalteinheit B01 für die Anwendung in Verbindung mit zwei Verarbeitungseinheiten B10 und B11 gezeigt.

Verschiedene Ausgangssignale, wie Daten, Steuer- und Adresssignale B20 bzw. B21 der Verarbeitungseinheiten B10 und B11 sind mit der Umschalteinheit B01 verbunden.

Darüber hinaus gibt es mindestens ein Synchronisationssignal, in Ausgestaltung der erfindungsgemäßen Anordnung die beiden Ausgangssignale B40 und B41, das mit einer der Vergleichseinheiten verbunden sind.

Die Umschalteinheit enthält mindestens ein Steuerregister B15, das mindestens ein Speicherelement für ein binäres Zeichen (Bit) B16 besitzt, das den Modus der Vergleichseinheit umschaltet. B16 kann mindestens die beiden Werte 0 und 1 annehmen und kann sowohl durch die Signale B20 oder B21 der Verarbeitungseinheiten oder durch interne Prozesse der Umschalteinheit gesetzt oder rückgesetzt werden.

Ist B16 auf den ersten Wert gesetzt, so arbeitet die Umschalteinheit im Vergleichsmodus. In diesem Modus werden alle ankommenden Datensignale aus B20 mit den Datensignalen aus B21 verglichen, sofern bestimmte vorgebbare Vergleichs-Bedingungen der Steuer- und/oder Adresssignale aus den Signalen B20 und B21 erfüllt sind, die die Gültigkeit der Daten und den vorgesehenen Vergleich für diese Daten signalisieren.

Sind diese Vergleichs-Bedingungen an beiden Signalen B20 und B21 gleichzeitig erfüllt, so werden die Daten aus diesen Signalen unmittelbar verglichen und bei Ungleichheit wird ein Fehlersignal B17 gesetzt. Ist nur die Vergleichs-Bedingung aus entweder den Signalen B20 bzw. B21 erfüllt, so wird das entsprechende Synchronisationssignal B40 bzw. B41 gesetzt. Dieses Signal bewirkt in der entsprechenden Verarbeitungseinheit B10 bzw. B11 ein Anhalten der Verarbeitung, und damit eine Verhinderung der Weiterschaltung der entsprechenden Signale, die bisher nicht miteinander verglichen werden konnten. Das Signal B40 bzw. B41 bleibt solange gesetzt, bis die entsprechende Vergleichs-Bedingung der jeweils anderen Verarbeitungseinheit B21 bzw. B20 erfüllt ist. In diesem Fall wird der Vergleich ausgeführt und das entsprechende Synchronisationssignal zurückgesetzt.

Um den Vergleich bei der beschriebenen ungleichzeitigen Bereitstellung der zu vergleichenden Daten durch die beiden Verarbeitungseinheiten sicherzustellen, ist es entweder notwendig, dass die Daten und Vergleichs-Bedingungen der entsprechenden Verarbeitungseinheit solange auf den entsprechenden Werten gehalten werden, bis das entsprechende Synchronisationssignal B40 bzw. B41 zurückgesetzt wurde, oder es müssen die zuerst bereitgestellten Daten in der Umschalteinheit bis zum Vergleich gespeichert werden.

Je nachdem, welche Verarbeitungseinheit zuerst Daten bereitstellt, muss diese mit der Weiterabarbeitung ihres Programms oder ihrer Prozesse solange warten, bis die andere Verarbeitungseinheit die entsprechenden Vergleichsdaten bereitstellt.

In einer speziellen Ausführung der Umschalteinheit nach Figur 1 kann auf eines der Signale B40 bzw. B41 verzichtet werden, wenn immer gewährleistet ist, dass die zugehörige Verarbeitungseinheit nicht eher Vergleichsdaten bereitstellt, als die andere Verarbeitungseinheit.

Ist B16 auf den zweiten Wert gesetzt, so sind die Synchronisationssignale B20 und B21 sowie das Fehlersignal B 17 immer inaktiv, beispielsweise auf den Wert 0 gesetzt. Es findet auch kein Vergleich statt und beide Verarbeitungseinheiten arbeiten voneinander unabhängig.

Eine wesentliche Komponente in dem erfindungsgemäßen System ist der Vergleicher. In der einfachsten Form ist er in Figur 1a dargestellt. Die Vergleichskomponente M500 kann zwei Inputsignale M510 und M511 aufnehmen. Sie vergleicht diese dann auf Gleichheit, im hier dargestellten Kontext vorzugsweise im Sinne einer Bit-weisen Gleichheit. Falls sie Ungleichheit detektiert wird das Fehlersignal M530 aktiviert und das Signal M520 deaktiviert. Im Gleichheitsfalle wird der Wert der Inputsignale M510, M511 auf das Outputsignal M520 gegeben und das Fehlersignal M530 wird nicht aktiv, d.h. es signalisiert den "Gut"-Zustand. Von diesem Basis-System aus sind eine Vielzahl von erweiterten Ausführungsformen denkbar. Zunächst kann die Komponente M500 als so genannte TSC- Komponente (totally self checking) ausgeführt werden. In diesem Fall wird das Fehlersignal M530 auf mindestens zwei Leitungen ("dual rail") nach außen geführt, und es ist durch interne Design- und Fehlerentdeckungsmaßnahmen sichergestellt, dass in jedem möglichen Fehlerfall der Vergleichskomponente dieses Signal korrekt oder erkennbar unkorrekt vorliegt. Eine bevorzugte Ausführungsform in der Benutzung des erfindungsgemäßen Systems ist es, einen solchen TSC-Vergleicher zu verwenden.

Eine zweite Klasse von Ausführungsformen kann dahingehend unterschieden werden, welchen Grad der Synchronität die beiden Inputs M510, M511 (bzw. M610, M611) haben müssen. Eine möglich Variante ist durch taktweise Synchronität gekennzeichnet, d.h. der Vergleich der Daten kann in einem Takt durchgeführt werden. Eine leichte Änderung entsteht dadurch, dass bei einem festen Phasenversatz zwischen den Inputs ein synchrones Verzögerungselement verwendet wird, das die entsprechenden Signale beispielsweise um ganzahlige oder auch halbe Taktperioden veröggert. Ein solcher Phasenversatz ist nützlich um Common Cause Fehler zu vermeiden, d.h. das sind solche Fehler, die gleichzeitig auf mehrere Verarbeitungseinheiten wirken können. In Figur 1c ist daher über die Komponenten aus Bild M5 hinaus die Komponente M640 eingefügt, die den früheren Input um den Phasenversatz verzögert.

Vorzugsweise ist dieses Verzögerungselement im Vergleicher untergebracht, um dieses Element nur im Vergleichsmodus zu verwenden. Alternativ oder ergänzend kann man, um Asynchronitäten ebenfalls tolerieren zu können, Zwischenpuffer in die Inputkette legen. Vorzugsweise werden diese als FIFO-Speicher ausgelegt. Falls ein solcher Puffer vorliegt, kann man auch Asynchronitäten bis zur maximalen Tiefe des Puffers tolerieren. In diesem Fall muss ein Fehlersignal auch dann ausgegeben werden, wenn der Puffer überläuft.

Weiter kann man im Vergleicher Ausführungsformen danach unterscheiden, wie das Signal M520 (oder M620) generiert wird. Eine bevorzugte Ausführungsform ist es, die Inputsignale M510, M511 (bzw. M610, M611) auf den Ausgang zu legen und die Verbindung durch Schalter unterbrechbar zu machen. Der besondere Vorteil dieser Variante ist es, dass zur Umschaltung zwischen Performanzmodus und möglichen verschiedenen Vergleichsmodi dieselben Schalter verwendet werden können. Alternativ können die Signale auch aus vergleicherinternen Zwischenspeichern generiert werden.

Eine letzte Klasse von Ausführungsformen kann dahingehend unterschieden werden, wie viele Inputs am Vergleicher vorliegen und wie der Vergleicher reagieren soll. Bei drei Inputs kann ein Majoritätsvoting, ein Vergleich von allen drei oder ein Vergleich von nur zwei Signalen vorgenommen werden. Bei vier oder mehr Inputs sind entsprechend mehr Varianten denkbar. Diese Varianten sind vorzugsweise mit den verschiedenen Betriebsmodi des Gesamtsystems zu koppeln.

Um den allgemeinen Fall darzulegen wird in Figur 1b eine verallgemeinerte Darstellung einer Umschalt- und Vergleichseinheit dargestellt, wie sie vorzugsweise verwendet werden soll. Von den n zu berücksichtigenden Ausführungseinheiten gehen n Signale N140,..., N14n an die Umschalt- und Vergleichskomponente N100. Diese kann bis zu n Ausgangssignale N160,..., N16n aus diesen Eingangssignalen erzeugen. Im einfachsten Fall, dem "reinen Performanzmodus", werden alle Signale N14i auf die entsprechenden Ausgangssignale N16i geleitet. Im entgegen gesetzten Grenzfall, dem "reinen Vergleichsmodus" werden alle Signale N140,..., N14n nur auf genau eines der Ausgangssignale N16i geleitet.

An dieser Figur lässt sich darlegen, wie die verschiedenen denkbaren Modi entstehen können. Dazu ist in dieser Figur die logische Komponente einer Schaltlogik N110 enthalten. Die Komponente muss nicht als solche existieren, entscheidend ist, dass ihre Funktion vorhanden ist. Sie legt zunächst fest, wie viele Ausgangssignale es überhaupt gibt. Weiter legt die Schaltlogik N110 fest, welche der Eingangssignale zu welchem der Ausgangssignale beitragen. Dabei kann ein Eingangssignal zu genau einem Ausgangssignal beitragen. In mathematischer Form anders formuliert ist also durch die Schaltlogik eine Funktion definiert, die jedem Element der Menge {N140,..., N14n} ein Element der Menge {N160,..., N16n} zuordnet

Die Funktion der Verarbeitungslogik N120 legt dann zu jedem der Ausgänge N16i fest, in welcher Form die Eingänge zu diesem Ausgangsignal beitragen. Auch diese Komponente muss nicht als eigene Komponente vorhanden sein. Entscheidend ist wieder, dass die beschriebenen Funktionen im System realisiert sind. Um beispielhaft die verschiedenen Variationsmöglichkeiten zu beschreiben, sei ohne Beschränkung der Allgemeinheit angenommen, dass der Ausgang N160 durch die Signale N141, ..., N14m erzeugt wird. Falls m = 1 entspricht dies einfach einer Durchschaltung des Signals, falls m = 2 dann werden die Signale N141, N142 verglichen. Dieser Vergleich kann synchron oder asynchron durchgeführt werden, er kann bitweise oder nur auf signifikante Bits oder auch mit einem Toleranzband durchgeführt werden.

Falls m >= 3 gibt es mehrere Möglichkeiten.

Eine erste Möglichkeit besteht darin, alle Signale zu vergleichen und bei Vorhandensein mindestens zweier verschiedener Werte einen Fehler zu detektieren, den man optional signalisieren kann.

Eine zweite Möglichkeit besteht darin, dass man eine k aus m -Auswahl vornimmt (k >m/2). Diese kann durch Verwendung von Vergleichern realisiert werden. Optional kann ein Fehlersignal generiert werden, wenn eines der Signale als abweichend erkannt wird. Ein möglicherweise verschiedenes Fehlersignal kann generiert werden, wenn alle drei Signale verschieden sind.

Eine dritte Möglichkeit besteht darin, diese Werte einem Algorithmus zuzuführen. Dies kann beispielsweise die Bildung eines Mittelwerts, eines Medianwert, oder die Verwendung eines fehlertoleranten Algorithmus (FTA) darstellen. Ein solcher FTA beruht darauf, Extremwerte der Eingangswerte weg zu streichen und eine Art der Mittelung über die restlichen Werte vorzunehmen. Diese Mittelung kann über die gesamte Menge der restlichen Werte, oder vorzugsweise über eine in HW leicht zu bildenden Teilmenge vorgenommen werden. In diesem Fall ist es nicht immer notwendig, die Werte tatsächlich zu vergleichen. Bei der Mittelwertbildung muss beispielsweise nur addiert und dividiert werden, FTM, FTA oder Median erfordern eine teilweise Sortierung. Gegebenenfalls kann auch hier bei hinreichend großen Extremwerten optional ein Fehlersignal ausgegeben werden

Diese verschiedenen genannten Möglichkeiten der Verarbeitung mehrerer Signale zu einem Signal werden der Kürze wegen als Vergleichsoperationen bezeichnet.

Die Aufgabe der Verarbeitungslogik ist es also, die genaue Gestalt der Vergleichsoperation für jedes Ausgangssignal - und damit auch für die zugehörigen Eingangssignale - festzulegen. Die Kombination der Information der Schaltlogik N110 (d.h. die o.g. Funktion) und der Verarbeitungslogik (d.h. die Festlegung der Vergleichsoperation pro Ausgangssignal, d.h. pro Funktionswert) ist die Modusinformation und diese legt den Modus fest. Diese Information ist im allgemeinen Fall natürlich mehrwertig, d.h. nicht nur über ein logisches Bit darstellbar. Nicht alle theoretisch denkbaren Modi sind in einer gegebenen Implementierung sinnvoll, man wird vorzugsweise die Zahl der erlaubten Modi einschränken. Zu betonen ist, dass im Fall von nur zwei Ausführungseinheiten, wo es nur einen Vergleichsmodus gibt, die gesamte Information auf nur ein logisches Bit kondensiert werden kann.

Eine Umschaltung von einem Performanz- in einen Vergleichsmodus ist im allgemeinen Fall dadurch charakterisiert, dass Ausführungseinheiten, die im Performanzmodus auf verschiedene Ausgänge hin abgebildet werden, im Vergleichsmodus auf den gleichen Ausgang hin abgebildet werden. Vorzugsweise ist dies dadurch realisiert, dass es ein Teilsystem von Ausführungseinheiten gibt, bei dem im Performanzmodus alle Eingangssignale N14i, die im Teilsystem zu berücksichtigen sind, direkt auf korrespondierende Ausgangssignale N16i geschalten werden, während sie im Vergleichsmodus alle auf einen Ausgang hin abgebildet sind. Alternativ kann eine solche Umschaltung auch dadurch realisiert werden, dass Paarungen geändert werden. Es ist dadurch dargestellt, dass man im allgemeinen Fall nicht von dem Performanzmodus und dem Vergleichsmodus sprechen kann, obwohl man in einer gegebenen Ausprägung der Erfindung die Menge der erlaubten Modi so einschränken kann, dass dies der Fall ist. Man kann aber immer von einer Umschaltung vom Performanz- in den Vergleichsmodus (und umgekehrt) sprechen.

Zwischen diesen Modi kann, über Software gesteuert, dynamisch im Betrieb umgeschaltet werden. Ausgelöst wird die Umschaltung dabei beispielsweise über die Ausführung von speziellen Umschaltinstruktionen, speziellen Instruktionssequenzen, explizit gekennzeichneten Instruktionen oder durch den Zugriff auf bestimmte Adressen durch wenigstens eine der Ausführungseinheiten des Multiprozessorsystems.

In Figur 2 ist ein detaillierter beschriebenes Zwei-Prozessor- oder Zwei μC-System mit einer erfindungsgemäßen Umschalt- und Vergleichseinheit M100 dargestellt, bei dem optional auch verschiedene der eingezeichneten Signale entfallen können. Es besteht aus zwei Verarbeitungseinheiten (M110, M111) und einer Umschalt- und Vergleichseinheit M100. Von jeder Verarbeitungseinheit gehen Datensignale (M120, M121) und Adress/Steuersignale (M130, M131) zu der Umschalteinheit, und jede Verarbeitungseinheit bekommt optional auch von der Umschalteinheit Daten (M150, M151) und Steuersignale (M140, M141) zurück. Die Einheit M 100 gibt Daten (M160, M161) und Statusinformationen M 169 aus und empfängt Signale wie z.B. Daten (M170, M171) und Steuersignale M179, die auch an die Verarbeitungseinheiten weitergeleitet werden können. Über M170, M171 und M179 kann optional auch der Betriebsmodus der Einheit M 100 unabhängig von den Verarbeitungseinheiten eingestellt werden; ebenso können die Prozessoren über die Ausgänge M120, M121 (z.B. Datenbus) und die Steuer- und Adresssignale M130, M131 (z.B. Write) in der Einheit M100 den Betriebsmodus einstellen - z.B. Performanzmodus (ohne Vergleich) oder Vergleichsmodus (mit Vergleich der Signale M120, M121 und/oder der Signale M170, M171, die z.B. von peripheren Einheiten kommen). Im Performanzmodus werden die Ausgänge M120, M121 gegebenenfalls in Verbindung mit Steuersignalen auf die Ausgänge M160, M161 weitergeleitet und umgekehrt die Eingänge M170, M171 auf M150, M151. Im Vergleichsmodus werden die Ausgänge verglichen und vorteilhafterweise nur im fehlerfreien Fall an M160, M161 weitergeleitet, wobei wahlweise beide Ausgänge benutzt werden, oder nur einer von beiden. Ebenso ist eine Überprüfung von Eingangsdaten M170, M171 möglich, die an die Verarbeitungseinheiten weitergeleitet werden. Bei einem fehlerhaften Vergleich der Signale im Vergleichsmodus wird ein Fehlersignal generiert und - z.B. mittels double-rail Signalen: fehlersicher - nach außen signalisiert (Bestandteil der Statusinformation M169). Der Status M169 kann auch den Betriebsmodus oder Informationen über den zeitlichen Versatz der Signale der Ausführungseinheiten beinhalten. Im Falle der Nichtbereitstellung von Vergleichsdaten einer Verarbeitungseinheit in einem vorgegebenen (programmierbaren) Zeitintervall wird das Fehlersignal auch aktiviert. Im Falle eines Fehlers können die Ausgänge M160, M161 gesperrt werden (fail silent Verhalten). Das kann sowohl digitale als auch analoge Signale betreffen. Diese Ausgangstreiberstufen können aber auch die unverzögerten (nicht zwischengespeicherten) Ausgangssignale M120, M121 einer Verarbeitungseinheit ausgeben, mit der Möglichkeit der nachträglichen Fehlerentdeckung. Das wird von einem sicherheitsrelevanten System toleriert, solange die Fehlertoleranzzeit nicht überschritten wird, d.h. die Zeit, die ein (träges) System noch nicht katastrophal auf Fehler reagiert und deshalb noch die Möglichkeit der Korrektur besteht.

Auch Ausgangssignale M180, M181, die nicht in die UVE geführt werden und interne Signale einer Verarbeitungseinheit, können zumindest bezüglich ihres berechneten Wertes verglichen werden, indem man diesen Wert auf den Ausgängen M120, M121 zum Zwecke des Vergleichs ausgibt. Entsprechendes kann auch mit Eingangssignalen M190, M191, die nicht über M100 kommen, durchgeführt werden.

Um die Einheit M100 zu überwachen kann es für ausgewählte oder auch alle Signale M160, M161 möglich sein, sie über M170, M171 oder auch M190, M191 zurück zu lesen. Damit kann man auch im Vergleichsmodus sicherstellen, dass fehlerhafte Signale aus der Einheit M100 detektiert werden. Durch einen geeigneten Abschaltpfad, auf den (in einer ODER-Verknüpfung) M100, M110, M111 Zugriff haben, kann damit ein fail-silence Verhalten des gesamten Systems hergestellt werden.

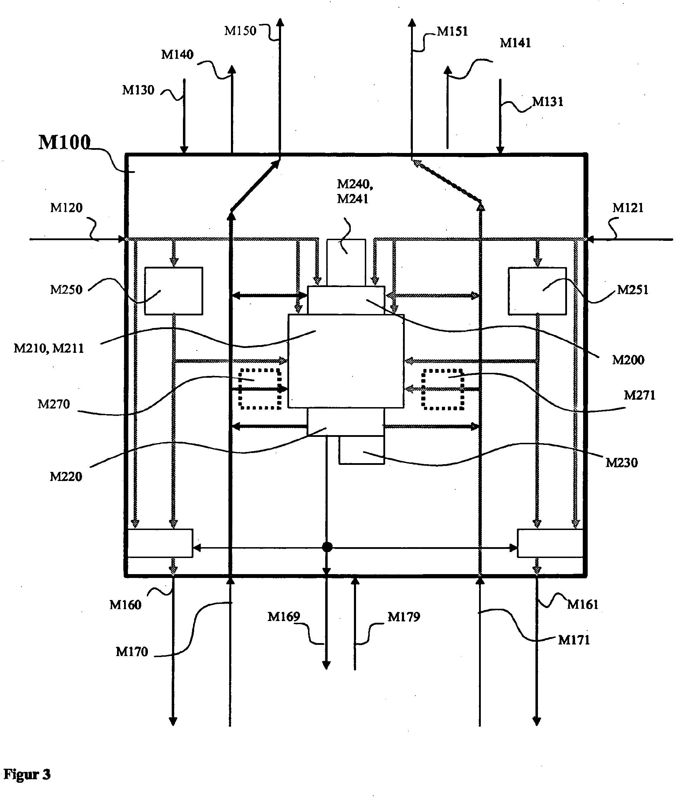

In Figur 3 ist eine mögliche Implementierung der Umschalt- und Vergleichseinheit M100 aus Figur 2 im Detail dargestellt. Die Einheit M100 enthält ein Controlregister M200 mit mindestens einem Bit, das den Modus (Performanz/ Vergleich) darstellt und ein Statusregister M220 mit mindestens einem Bit, das den Fehlerzustand im Vergleichsmodus darstellt. Die Wait- und Interruptsignale werden von weiteren Bits im Controlregister für jeweils beide Verarbeitungseinheiten gesteuert. Dabei ist auch gegebenenfalls zwischen verschiedenen Interrupts zu unterscheiden, wie zum Beispiel für Synchronisationszwecke, zum Vorbereiten auf die Betriebsmodusumschaltungen sowie für die Fehlerbehandlung. Optional gibt es weitere Controlregister, wie z.B. M240, das die maximal erlaubte Zeitdifferenz (in Anzahl von Taktperioden) zwischen den Verarbeitungseinheiten zur Ansteuerung eines internen oder externen Watchdogs enthält, sowie M241 mit dem Zeitdifferenzwert (Taktperiodenanzahl), ab welchem der schnellste Prozessor mittels WAIT- oder Interrupt-Signalen zeitweise angehalten bzw. verzögert werden soll, um beispielsweise einen Überlauf von Datenregistern zu verhindern.

Im Statusregister M220 wird z.B. neben dem Error-Bit auch gespeichert, wie groß der Taktversatz zwischen den Verarbeitungseinheiten aktuell ist. Dazu wird z.B. mindestens ein Timer M230 immer von einer Verarbeitungseinheit gestartet wenn ein (über Adress- und Steuersignale, z.B. bestimmter Adressbereich) besonders gekennzeichneter Datenwert zuerst bereitgestellt wird und der Wert des Timers immer dann ins Statusregister übernommen, wenn der entsprechende Datenwert von der zweiten Verarbeitungseinheit bereitgestellt wird. Der Timer wird darüber hinaus vorzugsweise so eingestellt, dass auch bei unterschiedlichen Programmabläufen entsprechend der WCET (worst case execution time) garantiert alle Verarbeitungseinheiten ein Datum liefern müssen. Falls der vorgegebene Wert vom Timer überschritten wird, wird ein Fehlersignal ausgegeben.

Die Ausgänge M120, M121 der Verarbeitungseinheiten sind in M100 insbesondere für den Vergleichsmodus in einem Pufferspeicher M250, M251 zu speichern, sofern es sich um digitale Daten handelt und sie nicht taktgenau bereitgestellt werden können. Vorzugsweise kann dieser Speicher als FIFO ausgeführt sein. Besitzt dieser Speicher nur eine Tiefe von 1 (Register), so ist z.B. durch Wait-Signale dafür zu sorgen, dass die Ausgabe weiterer Werte bis zum erfolgten Vergleich verzögert wird, um einen Datenverlust zu vermeiden.

Weiterhin gibt es eine Vergleichseinheit M210, die die digitalen Daten aus den Eingangsspeichern M250, M251, den direkten Eingängen M120, M121 oder M170, M171 miteinander vergleicht. Diese Vergleichseinheit kann auch serielle digitale Daten (z.B. PWM-Signale) miteinander vergleichen, wenn man z.B. in der Speichereinheit M250, M251 die seriellen Daten empfangen und in parallele Daten umwandeln kann, die dann in M210 verglichen werden. Ebenso können asynchrone digitale Eingangssignale M170, M171 über zusätzliche Speichereinheiten M270, M271 synchronisiert werden. Wie auch für die Eingangssignale 120, 121, werden diese vorzugsweise in einem FIFO zwischengepuffert. Die Umschaltung zwischen Performance- und Vergleichsmodus erfolgt durch Setzen oder Rücksetzen des Modus-Bits im Controlregister, wodurch z.B. entsprechende Interrupts in den beiden Verarbeitungseinheiten verursacht werden. Der Vergleich selbst wird durch die bereitgestellten Daten M120, M121 sowie den dazugehörigen Adressen und Steuersignalen M130, M131 veranlasst. Dabei können bestimmte Signale aus M120 und M130 bzw. M121 und M131 als Kennung fungieren, die angibt, ob ein Vergleich der zugeordmneten Daten erfolgen soll.

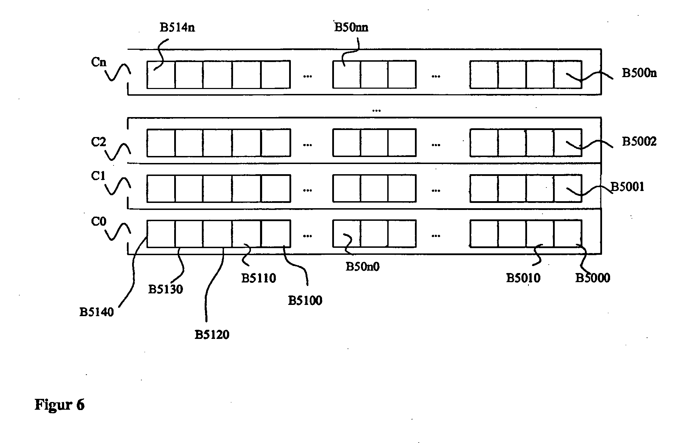

Dies ist eine weitere Ausführungsform gegenüber der einfachen Umschaltung in Figur 1. Hier sind vorteilhafterweise beim Übergang in einen Vergleichsmodus mittels der Interrupt-Routinen verschiedene Vorbereitungen zu treffen, damit gleiche Anfangs-Bedingungen für beide Verarbeitungseinheiten geschaffen werden. Ist die Verarbeitungseinheit damit fertig, wird von ihr das prozessorspezifische Ready-Bit im Controlregister gesetzt und die Verarbeitungseinheit bleibt im Wartezustand, bis auch der andere Verarbeitungseinheit seine Bereitschaft durch sein Ready-Bit signalisiert (siehe auch Beschreibung des Contolregisters in Figur 6).

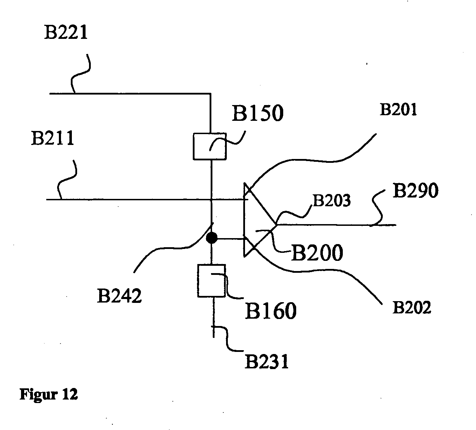

In dieser Vergleichseinheit können ebenso analoge Daten in einer speziell dafür geeigneten analogen Vergleichseinheit M211 (analog compare unit) miteinander verglichen werden. Das setzt aber voraus, dass die Ausgabe der analogen Signale genügend synchron zueinander erfolgt oder dass man in der analog compare unit eine Speicherung der durch einen dort implementierten ADC digitalisierten Daten vorsieht (siehe dazu weitere Ausführungen zu den Figuren 12 bis 14). Die Synchronität kann man erreichen, indem man die digitalen Ausgaben der Verarbeitungseinheiten (Daten, Adress- und Steuersignale) wie oben beschrieben miteinander vergleicht und die zu schnellen Verarbeitungseinheit warten lässt. Zu diesem Zwecke kann man auch die digitalen Signale, die als Quelle der analogen Signale im Verarbeitungseinheit verarbeitet werden, über die Ausgänge M120, M121 an die Einheit M100 geben, obwohl diese Signale sonst extern nicht benötigt werden. Dieser redundante Vergleich zusätzlich zum Vergleich der analogen Signale sorgt dafür, dass ein Fehler in der Berechnung schon frühzeitiger erkannt werden kann und außerdem erleichtert das die Synchronisation der Verarbeitungseinheiten. Der Vergleich der analogen Signale bewirkt eine zusätzliche Fehlererkennung für den DAC (digital to analog converter) der Verarbeitungseinheit. In anderen Strukturen der DCSL-Architekturen ist eine solche Möglichkeit nicht gegeben.

Für analoge Eingangssignale von den peripheren Einheiten ist auch ein Vergleich möglich. Insbesondere wenn es sich um redundante Sensorsignale des gleichen Systemparameters handelt, benötigt man dann keine zusätzlichen Synchronisationsmaßnahmen, sondern nur gegebenenfalls ein Steuersignal, das die Gültigkeit der Sensorsignale anzeigt. Die Realisierung eines Vergleichs analoger Signale wird im Detail noch gezeigt.

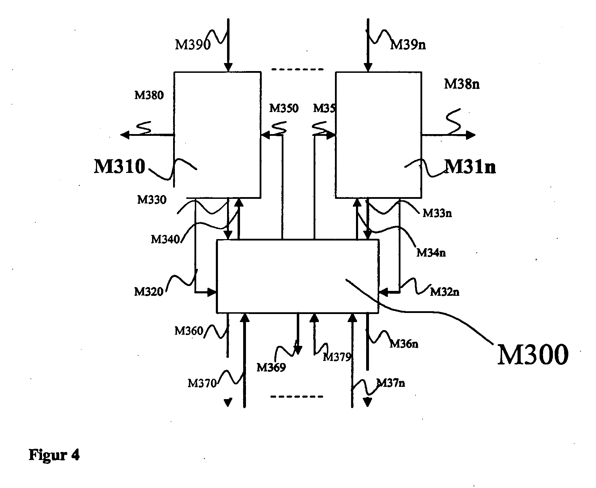

Figur 4 zeigt ein Multiprozessorsystem mit wenigstens n+1 Verarbeitungseinheiten, wobei jede dieser Komponenten wiederum auch aus mehreren Teil-Verarbeitungseinheiten (CPUs, ALUs, DSPs mit entsprechenden Zusatzkomponenten) bestehen kann. Die Signale dieser Verarbeitungseinheiten werden genauso mit einer Umschalt- und Vergleichseinheit verbunden, wie es im Zweier-System nach Figur 2 beschrieben wurde. Alle Komponenten und signale in dieser Figur haben deshalb inhaltlich die gleiche Bedeutung wie die entsprechenden Komponenten und Signale in Figur 2. Die Umschalt- und Vergleichseinheit M300 kann im Multiprozessor-System unterscheiden zwischen dem Performanzmodus (alle Verarbeitungseinheiten arbeiten verschiedene Tasks ab), verschiedenen Vergleichsmodi (die Daten zweier oder auch mehrerer Verarbeitungseinheiten sollen verglichen werden und bei Abweichungen soll ein Fehler signalisiert werden) und verschiedenen Votingmodi (Mehrheitsentscheid bei Abweichung nach unterschiedlichen vorgebbaren Algorithmen). Für jede Verarbeitungseinheit kann dabei separat entschieden werden, in welchem Modus sie arbeitet und mit welchen anderen Verarbeitungseinheiten zusammen sie gegebenenfalls in diesen Modi arbeitet. Wie die Umschaltung genau erfolgt, wird im Anschluss bei der Beschreibung der Controlregister nach Figur 6 weiter ausgeführt.

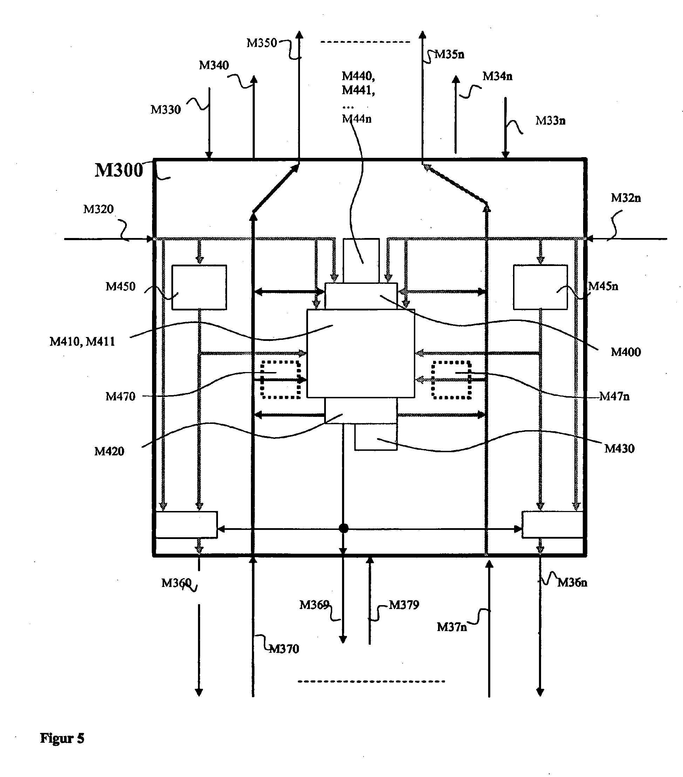

Figur 5 zeigt eine mögliche Implementierung einer Umschalteinheit für ein Multiprozessorsystem mit n+1 Verarbeitungseinheiten. Für jeden Verarbeitungseinheit ist mindestens ein Controlregister M44i in der Steuereinheit des Umschalt- und Vergleichsmoduls vorgesehen. Ein bevorzugter Satz von Controlregistern ist in Figur 6 ausführlich gezeigt und beschrieben. Dabei entspricht M44i jeweils dem Controlregister Ci.

Verschiedene Ausführungsformen im Controlregister sind denkbar. Es kann über geeignete Bitkombinationen beschrieben werden, ob ein Fehlererkennungs- oder ein Fehlertoleranzmuster verwendet werden soll. Je nach Aufwand, den man in die Einheit M300 steckt, kann man auch noch angeben, welchen Typ von Fehlertoleranzmuster (2 aus 3, Median, 2 aus 4, 3 aus 4, FTA, FTM...) man verwenden will. Weiter kann man es konfigurierbar gestalten, welchen Ausgang man durchschaltet. Man kann auch danach Ausführungsformen bilden, welche Komponenten für welches Datum auf diese Konfiguration Einfluss nehmen können.

Die Ausgangssignale der beteiligten Verarbeitungseinheiten werden dann in der Umschalteinheit miteinander verglichen. Da die Signale nicht notwendigerweise taktgenau verarbeitet werden, ist eine Zwischenspeicherung der Daten erforderlich. Dabei können auch Daten in der Umschalteinheit verglichen werden, die mit einer größeren Zeitdifferenz von den verschiedenen Verarbeitungseinheiten an die Umschalteinheit gegeben werden. Durch die Verwendung eines Zwischenspeichers (z.B. ausgebildet als FIFO-Speicher: first in - first out oder auch in einer anderen Pufferform) können auch zunächst von einem Verarbeitungseinheit mehrere Daten empfangen werden, während andere Verarbeitungseinheiten noch keine Daten bereitstellen. Dabei ist ein Maß für die Synchronität der beiden Verarbeitungseinheiten der Füllstand des FIFO-Speichers. Wird ein bestimmter vorgebbarer Füllstand überschritten, so wird die in der Bearbeitung am weitesten vorangeschrittene Verarbeitungseinheit entweder durch ein vorhandenes WAIT-Signal oder durch geeignete Interrupt-Routinen zeitweise angehalten, um auf die langsamer in der Bearbeitung voranschreitenden Verarbeitungseinheiten zu warten. Die Überwachung sollte dabei auf alle extern verfügbaren Signale einer Verarbeitungseinheit ausgedehnt werden; das schließt auch analoge Signale oder PWM-Signale mit ein. In der Umschalteinheit sind dazu Strukturen vorzusehen, die einen Vergleich solcher Signale zulassen. Zusätzlich wird vorgeschlagen, eine maximale Zeitabweichung zwischen den zu vergleichenden Daten vorzugeben und mittels mindestens eines Timers zu überwachen.

Werden im allgemeinen Fall mehr als zwei Verarbeitungseinheiten durch eine gemeinsame Umschalteinheit miteinander verbunden, so ist für jede diese Verarbeitungseinheiten oder Verarbeitungseinheiten ein Controlregister erforderlich. Eine spezielle Ausführung dieser Controlregister ist in Figur 6 erklärt.

Die (n+1) unteren Bits B500x bis B50nx des jeweiligen Controlregisters Cx sind den n+1 Prozessoren/Verarbeitungseinheiten eindeutig zugeordnet. Das Bit B514x des Controlregisters Cx schaltet zwischen Vergleich/Voting einerseits und paralleler Arbeit andererseits um und entspricht dem Wert von B16 aus Figur 1. Das Bit B513x zeigt an, ob die betreffende Verarbeitungseinheit bereit zum Vergleich ist (Ready), das Bit B512x steuert das Synchronisationssignal (WAIT oder INTERRUPT) und das Bit B511x kann benutzt werden, um die entsprechende Verarbeitungseinheit x durch einen Interrupt auf den Vergleich vorzubereiten. Entsprechend steuert das Bit B5110x einen Interrupt, der die Verarbeitungseinheit in den Parallelmodus zurückschaltet.

Sind B50ik und B50kk des Controlregisters Ck auf Eins gesetzt ($0 \leq$ i, k $\leq$ n)., so bedeutet das in dieser ausführungsform, daß die Ausgänge der Verarbeitungseinheit i mit denen vom Verarbeitungseinheit k verglichen werden sollen. Ist zusätzlich auch B50jk gleich Eins, dann soll zwischen i, j und k gevotet werden und das Votingergebnis wird am Ausgang k der UVE ausgegeben ($0 \leq$ i, j, k $\leq$ n). Dazu kann für jede Gruppe von Verarbeitungseinheiten eine spezielle Art des Votings oder auch nur eines mehrheitlichen Vergleichs festgelegt werden, wie schon in der Erläuterung zum Bild M4 aufgezählt wurde. Allgemein müssen alle Bits B50ik für die zu vergleichenden/zu votenden Verarbeitungseinheiten i (im Controlregister Ck) gesetzt sein, wenn am Ausgang k der UVE das Votingergebnis ausgegeben werden soll. Eine parallele Ausgabe auf anderen Ausgängen ist möglich.

Eine Eins in B50ii des Controlregisters i ($0 \leq i, \leq n$) gibt an, daß der Ausgang i der Vergleichseinheit aktiv sein soll. Tragen alle Controlregister Ci nur in den entsprechenden Speicherstellen B50ii eine Eins (i = 0, 1, ...n), so arbeiten alle Verarbeitungseinheiten im Performanzmodus mit beliebig unterschiedlichen Programmen und eigenen Ausgangssignalen. Sind alle n+1 unteren Bits B50ik gleich Eins (i = 0, 1, ...n), und ist außerdem B514k gesetzt, dann werden die Ausgangssignale aller Verarbeitungseinheiten durch Mehrheitsentscheid (Voting) ausgewählt und auf den Ausgang k der UVE ausgegeben; bei n=1 findet nur ein Vergleich statt.

In den folgenden Ausführungen wird beispielhaft beschrieben, wie ein Ablauf beim Übergang zu einem Vergleich/Voting in einem System mit mehreren Verarbeitungseinheiten aussehen kann.

Das Bit B514i im Controlregister Ci wird gesetzt, um den Vergleich oder das Voting zu aktivieren. Dieses Bit kann sowohl durch den Verarbeitungseinheit selbst gesetzt werden, als auch von den Umschalt-und Vergleichseinheit in Abhängigkeit von bestimmten Systemzuständen, Zeitbedingenungen oder anderen Bedingungen (wie zum Beispiel Zugriffen auf bestimmte Speicherbereiche, Fehler oder Unplausibilitäten). Werden mit B514i die Bits B50ii und B50ki gesetzt, werden durch die UVE automatisch die Bits B511i und B511k gesetzt und dadurch Interrupts in den Verarbeitungseinheiten i und k ausgelöst. Diese Interrupts bewirken, daß die Verarbeitungseinheiten an eine bestimmte Programmstelle springen, bestimmte Initialisierungsschritte für den Übergang zum zum Vergleichsmodus durchführen und dann eine Rückmeldung (Ready) an die Umschalt- und Vergleichseinheit ausgeben. Das Ready-Signal bewirkt ein automatisches Zurücksetzen des Interrupt-Bits B511i im jeweiligen Controlregister Ci der Verarbeitungseinheit und gleichzeitig das Setzen des Wait-Bits B512i. Wenn alle Wait-Bits der beteiligten Verarbeitungseinheiten gesetzt sind, werden sie von der Umschalt- und Vergleichseinheit gleichzeitig zurückgesetzt. Die Verarbeitungseinheiten beginnen dann mit der Abarbeitung der zu überwachenden Programmteile. In einer vorteilhaften Ausführungsform ist ein Schreiben auf ein Controlregister Ci mit gesetztem Bit B514i durch Verriegelung (HW oder SW) verhindert. Das bewirkt sinnvollerweise, dass die Konfiguration des Vergleichs nicht während der Abarbeitung geändert werden kann. Eine Änderung im Controlregister Ci ist erst nach dem Rücksetzen des Bits B514i möglich. Dieses Rücksetzen bewirkt Interrupts in den betreffenden Verarbeitungseinheiten durch Setzen der Bits B510x in den Controlregistern aller beteiligten Verarbeitungseinheiten zum Übergang in den Normalmodus (parallele Arbeitsweise).

Die Konsistenz aller Controlregister zueinander wird entsprechend Anwendervorgaben überwacht und im Fehlerfalle wird ein Fehlersignal generiert, das Bestandteil der Statusinformationen ist. So darf es zum Beispiel nicht vorkommen, dass eine Verarbeitungseinheit gleichzeitige für mehrere unabhängige Vergleichs- oder Votingprozesse verwendet werden, weil dann die Synchronisation nicht gewährleistet ist. Denkbar ist aber ein Vergleich auch mehrerer Verarbeitungseinheiten ohne eine Ausgabe der Datensignale, sondern nur zu dem Zwecke, ein Fehlersignal bei Ungleichheit zu erzeugen.

In einer weiteren Ausführungsform ist der Eintrag in mehreren oder allen Controlregistern der an einem Vergleich oder einem Voting beteiligten Verarbeitungseinheiten gleichartig vorzunehmen, d.h. die entsprechenden Bits dieser Verarbeitungseinheiten sind dort gleichartig zu setzen, ggf. mit Ausnahme des eigenen Bits i, das die Ausgabe steuert.

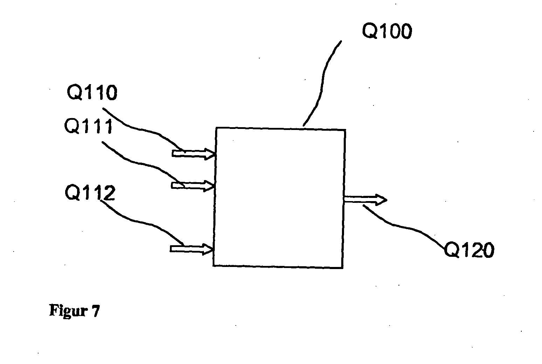

In Figur 7 ist die Voting-Einheit Q100 für zentrales Voting dargestellt. Das Voten kann sowohl mittels geeigneter Hardware als auch softwaremäßig durchgeführt werden. Der Voting-Algorithmus (z.B. bitgenaues Voting) ist dazu vorzugeben. Die Voting-Einheit Q100 erhält dabei mehrere signale Q110, Q111, Q112 und bildet aus diesen ein Ausgangssignal Q120, das durch Voting (z.B. eine m aus n-Auswahl) entsteht.

Tritt ein Fehler beim Vergleich auf, wird in dem betreffenden Controlregister das Error-Bit gesetzt. Bei einem Voting wird das Datum der betreffenden Verarbeitungseinheit ignoriert; bei einem einfachen Vergleich der Ausgang gesperrt.

Alle Daten, die nicht rechtzeitig vor Ablauf der programmierten Zeit bereitstehen, werden wie Fehler behandelt. Das Rücksetzen der Error-Bits erfolgt systemabhängig und ermöglicht gegebenenfalls eine Reintegration der betreffenden Verarbeitungseinheit

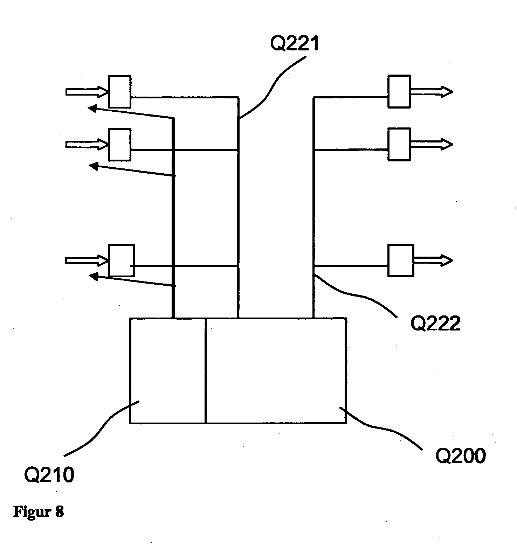

Für den Fall, daß die Verarbeitungseinheiten und/oder der Voter nicht räumlich konzentriert angeordnet sind, ist auch ein dezentrales Voting in Verbindung mit einem geeigneten Bussystem gemäß Figur 8 möglich. In Figur 8 wird eine dezentrale Votingeinheit Q200 von eine Steuereinheit Q210 kontrolliert. Sie ist über Bussysteme Q221, Q222 angebunden, erhält Daten über diese Bussysteme und gibt sie auch dort wieder aus.

Die Rücksetzung des Vergleichs- und Votingbits in einem Controlregister mit aktivem Ausgangsbit bewirkt einen Interrupt in den beteiligten Verarbeitungseinheiten, die dann wieder in eine parallele Arbeitsweise zurückgeführt werden. Dabei kann jeder Verarbeitungseinheit eine unterschiedliche Einsprungadresse besitzen, die separat verwaltet wird. Die Programmabarbeitung kann auch dann vom gleichen Programmspeicher aus erfolgen. Die Zugriffe sind aber separat und in der Regel zu unterschiedlichen Adressen. Sofern der sicherheitsrelevante Teil gering ist im Vergleich zu den parallelen Modi ist abzuwägen, ob ein eigener Programmspeicher mit dupliziertem Sicherheitspart eventuell weniger aufwändig ist. Auch der Datenspeicher kann im Performance-Mode gemeinsam benutzt werden. Die Zugriffe erfolgen dann nacheinander beispielsweise mittels des AHB/ABP-Bus.

Als Besonderheit ist noch zu erwähnen, daß die Error-Bits vom System ausgewertet werden müssen. Um eine sichere Abschaltung im Fehlerfalle zu gewährleisten, sind die sicherheitsrelevanten Signale in geeigneter Form redundant zu realisieren (zum Beispiel im 1-aus-2 Code).

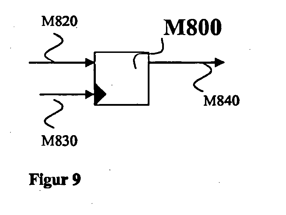

In den bisherigen UVEs nach den Figuren 1, 2,3,4 und 5 wurde zunächst angenommen, dass die Verarbeitungseinheiten mit gleichen oder voneinander abgeleiteten Takten arbeiten, die zueinander in einer konstanten Phasenbeziehung stehen. Werden für die Verarbeitungseinrichtungen auch Takte von verschiedenen Oszillatoren und Generatoren verwendet, bei denen sich die Phasenbeziehungen ändern, so muss man die damit erzeugten Signale synchronisieren, wenn sie die Taktdomäne wechseln. Ein Synchronisationelement M800 ist dazu in Figur 9 gezeigt. Um insbesondere die digitalen Daten sicher abzuspeichern und zu vergleichen sind dann Synchronisationseinrichtungen M800 erforderlich, die an beliebigen Stellen im Signalfluss angebracht werden können. Diese gewährleisten einmal das Abspeichern der Daten M820 mit dem Takt M830 der Verarbeitungseinheit, die diese Daten bereitstellt. Zum Lesen wird dann der Takt benutzt, mit dem das Datum M840 weiterverarbeitet wird. Eine solche Synchronisationsstufe M800 kann als FIFO ausgebaut sein, um mehrere Daten speichern zu können (siehe Figur 9). Im allgemeinen Fall reicht die Synchronisation der Daten allein nicht aus, sondern es ist auch das Bereitstellungssignal der Daten mit dem Empfangstakt zu synchronisieren.

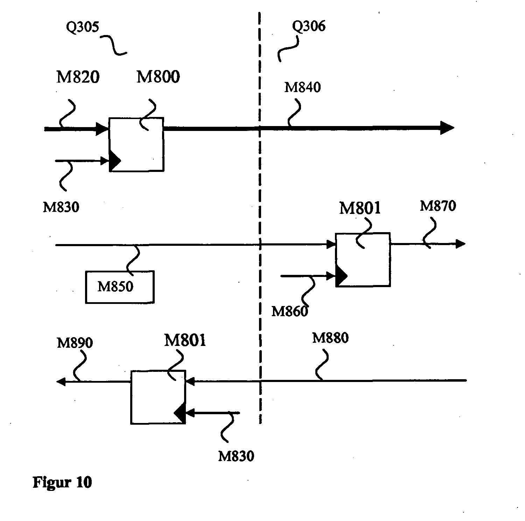

Dazu ist darüber hinaus ein Handshake-Interface erforderlich (Figur 10), dass durch Anforderungsisgnale M850 und Quittungssignale M880 die Übernahme gewährleistet. Ein solches Interface ist immer dann notwendig, wenn sich die Taktdomäne ändert, um eine sichere Übertragung der Daten von einer Taktdomäne zur anderen zu gewährleisten. Beim Schreiben werden dabei die Daten M820 aus dem Bereich Q305 mit dem Takt M830 in den Registerzellen M800 synchronisiert zur Verfügung gestellt und ein Schreibanforderungssignal M850 zeigt die Bereitstellung der Daten an. Dieses Schreibanforderungssignal wird von dem Bereich Q306 mit dem Takt M860 in ein Speicherelement M801 übernommen und als synchronisiertes Signal M870 zeigt es die Bereitstellung der Daten an. Mit der nächsten aktiven Taktflanke von Takt M860 wird daraufhin das synchronisierte Datum M840 übernommen und dabei ein Bestätigungssignal M880 zurückgesendet. Dieses Bestätigungssignal wird vom Takt M830 in einem weiteren Speicherelement M801 synchronisiert zum Signal M890 und damit wird die Bereitstellung der Daten beendet. Es können dann neue Daten in das betreffende Register geschrieben werden. Solche Interfaces sind Stand der Technik und bekannt und können in speziellen Ausführungsformen durch eine zusätzliche Codierung besonders schnell arbeiten, ohne auf ein Quittungssignal warten zu müssen.

In einer besonderen Ausführungsform sind die Speicherelemente M800 als FIFO-Speicher (first- in, first-out) ausgestaltet.

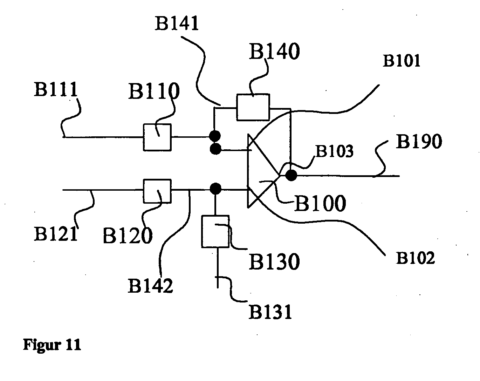

Die Schaltungen zum Vergleich analoger Signale von Figur 11 bis Figur 14 setzen voraus, dass die Verarbeitungseinheiten, die die zu vergleichenden analogen Signale liefern, miteinander so synchronisiert sind, dass der Vergleich sinnvoll ist. Die Synchronisation kann durch die entsprechenden Signale B40 und B41 von Figur 1 erreicht werden.

Figur 11 zeigt einen Differenzverstärker. Mit Hilfe dieses Elementes können zwei Spannungen miteinander verglichen werden.

Dabei ist B100 ein Operationsverstärker, auf dessen negativen Eingang B101 ein Signal B141 geschaltet ist, das über einen Widerstand B110 mit dem Wert $R_{in}$ mit dem Eingangssignal B111 verbunden ist, an dem der Spannungswert $V_1$ anliegt. Der positive Eingang B102 ist mit dem Signal B142 verbunden, das über den Widerstand B120 mit dem Wert $R_{in}$ mit dem Eingang B121 verbunden, an dem der Spannungswert $V_2$ anliegt. DerAusgang B103 dieses Operationsverstärkers ist mit dem Ausgangssignal B190 verbunden, das den Spannungswert $V_{out}$ besitzt. Das Signal B190 ist über den Widerstand B140 mit dem Wert $R_f$ mit dem Signal B141 verbunden und das Signal B142 ist über den Widerstand B130 mit dem Wert $R_f$ mit dem Signal B131 verbunden, das den Spannungswert des analogen Bezugspunktes $V_{agnd}$ trägt. Die Ausgangsspannung kann mit den oben angegebenen Spannungs- und Widerstandswerten nach folgender Formel berechnet werden:

$$V_{out} = R_f / R_{in} ( V_2 - V_1). \qquad (1)$$

Wird der Differenzverstärker nur mit einer positiven Betriebsspannung betrieben, wie üblicherweise bei CMOS, so wird als Analog-Ground $V_{agnd}$ eine Spannung zwischen Betriebsspannung und Digital-Ground gewählt, üblicherweise das mittlere Potential. Sind die zwei analogen Eingangsspannungen $V_1$ und $V_2$ nur geringfügig unterschiedlich, so wird die Ausgangsspannung $V_{out}$ nur eine geringe Differenz $V_{diff}$ zu dem analogen Ground aufweisen (positiv oder negativ).

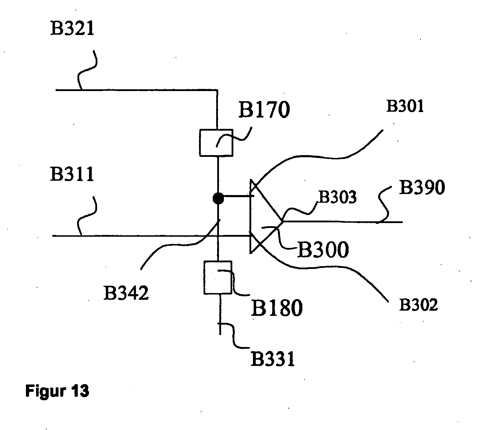

Mit Hilfe von 2 Komparatoren wird nun geprüft, ob die Ausgangsspannung oberhalb $V_{agnd} + V_{diff}$ (Figur 12) bzw. unterhalb $V_{agnd} - V_{diff}$ zudem analogen Bezugspunkt liegt (Figur 13).

Dabei wird in Figur 12 das Eigangssignal B221 über den Widerstand B150 mit dem Wert $R_1$ an das Signal B242 angeschlossen, das mit dem positiven Eingang B202 des Operationsverstärkers B200 verbunden ist. Weiterhin wird das Signal B242 über den Widerstand B160 mit dem Wert $R_2$ an das Signal B231 angeschlosssen , das als digitales Bezugspotential $V_{dgng}$ benutzt wird. Der negative Eingang B201 des Operationsverstärkers wird mit dem Einganssignal 211 verbunden, das den Spannungswert einer Referenzspannung $V_{ref}$ trägt. Der Ausgang B203 des Operationsverstärkers B200 ist mit dem Ausgangssignal B290 verbunden, das den Spannungswert $V_{oben}$ trägt.

In Figur 13 wird entsprechend das Eingangssignal B321 über den Widerstand B170 mit dem Wert $R_3$ an das Signal B342 angeschlossen, das mit dem negativen Eingang B301 des Operationsverstärkers B300 verbunden ist. Dieses Signal B342 ist weiterhin über den Widerstand B180 mit dem Wert R4 an das Signal B331 angeschlossen, das auch das digitale Bezugspotential $V_{dgnd}$ trägt. Der positive Eingang B302 des Operationsverstärkers B300 ist mit dem Eingangssignal B311 verbunden, das Spannungswert einer Referenzspannung $V_{ref}$ trägt. Der Ausgang B303 des Operationsverstärkers B300 ist mit dem Ausgangssignal B390 verbunden, das den Spannungswert $V_{unten}$ trägt.

Das wird dadurch erreicht, indem die Widerstände B150, B160, B170 und B180 mit ihren Werten $R_1$, $R_2$, $R_3$ und $R_4$ in Beziehung zu der festen Referenzspannung $V_{ref}$, die an den Signalen B211 und B311 anliegt, wie folgt dimensioniert werden:

$$V_{ref} = (V_{agnd} + V_{diff}) * R_2 / (R_1 + R_2) \quad (2)$$

$$V_{ref} = (V_{agnd} - V_{diff}) * R_4 / (R_3 + R_4) \quad (3)$$

$$V_{diff} = ((V_{2max} - V_{1min}) * R_f / R_{in}) - V_{agnd} \quad (4)$$

Mit $V_{2max}$ wird dabei der maximal tolerierte Spannungswert von $V_2$ an Signal B121 und mit $V_{1min}$ der minimal tolerierte Spannungswert von $V_1$ an Signal B111 bezeichnet. Die Referenzspannungsquelle kann von extern zur Verfügung gestellt werden, oder aber durch eine intern realisierte bandgap (temperaturkompensierte und betriebsspannungsunabhängige Referenzspannung) realisiert werden. In Gleichung (4) wird die maximale tolerierte Differenz $\mathbf{V}_{diff}$ aus der maximalen positiven Abweichung $\mathbf{V}_{2max}$ und der zugehörigen maximalen negativen Abweichung $V_{1min}$ bestimmt, d.h. ($\mathbf{V}_{2max}$ - $\mathbf{V}_{1min}$) ist die maximal tolerierte Spannungsabweichung redundanter analoger Signale zueinander, die miteinander verglichen werden sollen.

Wird einer der Spannungswerte an den beiden Signale B290 oder B390 ($\mathbf{V}_{oben}$ oder $\mathbf{V}_{unten}$) positiv, so liegt eine größere Abweichung der Analogsignale vor, als sie toleriert werden soll.

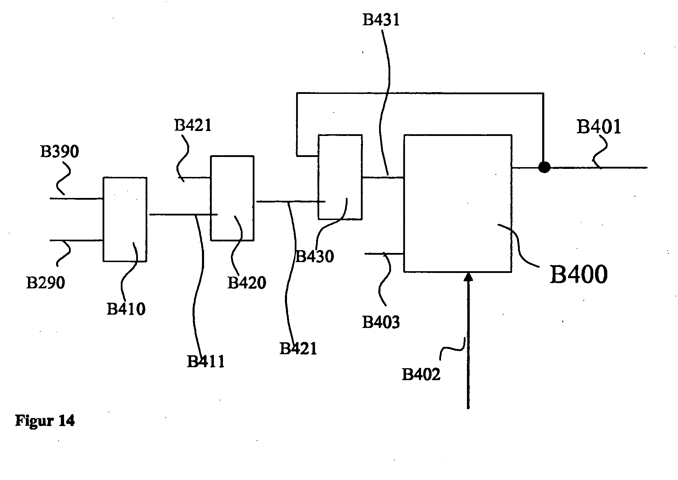

Sofern die Prozessoren, die diese Analogsignale liefern, synchronisiert sind, liegt somit ein Fehler vor, der gespeichert werden muß und ggf. zum Abschalten der Ausgangssignale führt. Die Synchronität ist gegeben, wenn zum Beispiel das Ready-Signal im Controlregister der entsprechenden Verarbeitungseinheiten aktiv ist, oder bestimmte digitale Signale an die UVE gesendet werden, die einen bestimmten Zustand des betreffenden Analogsignals und damit auch den zu vergleichenden Wert im Sinne einer Kennung signalisieren. Eine Schaltung, die den Fehler einspeichert, ist in Figur 14 gezeigt. In dieser Schaltung sind die beiden Eingangssignale B390 und B290 über eine NOR-Schaltung (logische ODER-Schaltung mit nachfolgender Invertierung) B410 zum Ausgangssignal B411 verknüpft. Dieser Signal B411 wird mit dem Eingangssignal B421 in einem weiteren NOR-Element B420 zum Ausgangssignal B421 verknüpft. Dieses Signal B421 wird in einer ODER-Schaltung B430 mit dem Signal B401 zum Signal B431 verknüpft, das als Eingangssignal für das Speicherelement (D-Flip-Flop) B400 dient. Das Ausgangssignal B401 dieses Elements B400 zeigt mit dem Wert 1 einen Fehler an. Das D-Flip-Flop B400 speichert mit dem Takt B403 eine 1 ein, wenn einer der beiden Spannungswerte $V_{unten}$ oder $V_{oben}$ an den Signalen B390 bzw. B290 positiv, also als digitales Signal den Wert high trägt, das Signal B421 nicht aktiv ist und kein Reset-Signal B402 anliegt. Der Fehler bleibt solange gespeichert, bis das Signal Reset wenigstens einmal aktiv war.

Zu beachten ist bei der Dimensionierung der Schaltungen Figur 11 bis Figur 13, daß die Widerstande zueinander matchen, d.h. daß die Widerstandsverhältnisse von $R_f$ und $R_{in}$, $R_1$ und $R_2$ sowie $R_3$ und $R_4$ möglichst unabhängig von Fertigungstoleranzen konstant sind. Mit dem Signal B421 kann man steuern, ob die Schaltung aktiv sein soll, oder gerade eine Synchronisation der Verarbeitungseinheiten stattfindet, bei der nicht verglichen werden soll. Das Signal B402 setzt einen vorherigen Fehler zurück und ermöglicht deshalb einen neuen Vergleich.

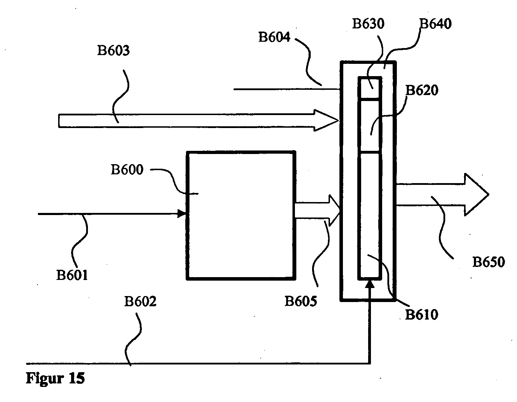

Figur 15 zeigt einen ADC. Dieser ADC kann je nach den bestehenden Anforderungen, wie z.B. bezüglich Wandlunggeschwindigkeit, Genauigkeit, Auflösung, Störfestigkeit, Linearität und Frequenzspektrum mit den verschiedenen bekannten Wandlungsmethoden realisiert werden.

So kann man zum Beispiel das Prinzip der sukzessiven Approximation wählen, wo man das Analogsignal mit einem generiertem Signal aus einem Digital-to-Analog-Converter (DAC) mittels eines Komparators vergleicht, wobei man die digitalen Eingangsbits des DAC systematisch vom MSB (most significant bit - höchstwertiges Bit) zum LSB (least significant bit - niedrigstwertiges Bit) probeweise auf high setzt und genau dann wieder zurücksetzt, wenn das analoge Ausgangssignal des DAC einen höheren Wert als das analoge Eingangssignal (das zu wandelnde Signal) hat. Der DAC steuert mit seinen Digitalbits vom LSB zum MSB entweder Widerstände oder Kapazitäten mit den Wichtungen 1, 2, 4, 8, 16, ... in der Weise, daß das Setzen des nächsthöheren Bits immer die doppelt so große Auswirkung auf den Analogwert hat, wie das vorherige. Nachdem alle Bits probeweise gesetzt und ggf. wieder zurückgesetzt wurden, entspricht der Wert des Digitalworts der digitalen Representation des analogen Eingangssignals. Für höhere Geschwindigkeitsanforderungen kann bei kontinuierlichen Datenströmen auch ein Konverter verwendet werden, der kontinuierlich das analoge Signal verarbeitet und ein serielles digitales Signal ausgibt, das diesen analogen Datenstrom durch die serielle Bitfolge annähert. Das Digitalwort ist hier durch die in einem Schieberegister gespeicherte Bitfolge repräsentiert. Solche Wandler setzen aber voraus, daß im Wandlungszeitraum ständig Änderungen des analogen Signals erfolgen, weil sie keine konstanten Werte verarbeiten können.

Für niedrigere Geschwindigkeitsanforderungen können auch Wandler nach dem Zählprinzip benutzt werden, die zum Beispiel mittels der Eingansspannung oder des Eingansstroms eine entsprechende konstante Auf- oder Entladung eines zu einem Integrator geschalteten Kondensators bewirken. Die dazu notwendige Zeit wird gemessen und ins Verhältnis gesetzt zu der Zeit, die in der Gegenrichtung zur Ent- bzw. Aufladung des gleichen Kondensators (Integrators) mittels einer Referenzspannungsquelle bzw. eines entsprechenden Referenzstromes notwendig ist. Die Zeiteinheit wird in Takten gemessen und die Zahl der benötigten Takte ist ein Maß für den analogen Eingangswert. Ein solches Verfahren ist zum Beispiel das dual-slope Verfahren, bei dem die eine Flanke (slope) durch die Entladung entsprechend dem Analogwert bestimmt ist und die zweite Flanke durch die Wiederaufladung entsprechend dem Referenzwert bestimmt ist (siehe auch

http://www.exstrom.com/journal/adc/dsadc.html).

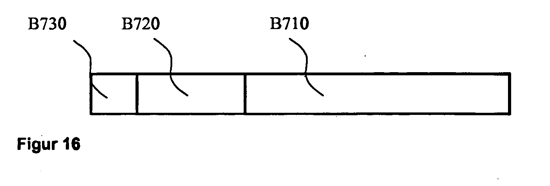

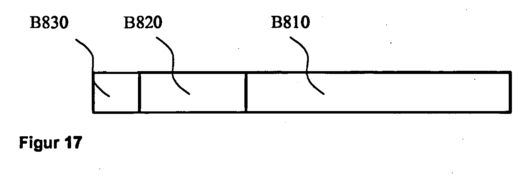

Der ADC B600 von Figur 15 wird gesteuert durch ein Triggersignal B602, das üblicherweise ein Ausgangssignal des Prozessors ist, der das Analogsignal bereitstellt und optional eine Kennung B603, die Auskunft über die Art des analogen Signals gibt, das gerade bereitgestellt wird, um eine Unterscheidung von mehreren analogen Signalen zu ermöglichen. Mit dem Triggersignal B602 wird das gewandelte Analogwort in den Speicherbereich B640 als Digitalwert in ein Register B610 übernommen und optional zusammen mit der Kennung B603, die in B620 abgespeichert wird und eventuell einem zusätzlichen Signal B604 (das ist 1 für die Kennzeichnung eines analogern Wertes), die in dem Speicher B630 abgelegt wird. Der Speicherbereich B640 kann vorteilhafterweise auch als FIFO (first-in, first-out) realisiert werden, wenn mehrere Werte abgespeichert werden sollen und der zuerst abgespeicherte Wert auch zuerst wieder ausgfegeben werden soll. Wird der Speicherbereich B640 sowohl für digitale als auch für digitalisierte analoge Werte benutzt, so werden vorteilhafterweise alle Digitalwerte um ein Bit A=0 an der MSB-Stelle ergänzt, entsprechend zu B630, um sie von digitalisierten Analogwerten mit A=1 (B630) zu unterscheiden (siehe Figuren 16 und 17). Sowohl B602 als auch B603 sind Bestandteil der digitalen Ausgangsdaten $O_i$ eines Prozessors i. In Figur 16 sind die Teile des abgespeicherten digitalisierten Analogwertes separat dargestellt, wie sie in dem Speichjerbereich abgelegt werden. Dabei ist B710 der digitalisiete Analogwert selbst, B720 die dazugehörige Kennuing und B730 das Analogbit, das in diesem Fall als 1 abzuspeichern ist. In Figur 17 ist eine Variante eines in dem gleichen Speicherbereich abgelegten Digitalwertes zu sehen. In B810 ist der Digitalwert selbst gespeichert, in B820 dazu optiona eine Kennung, die zum Beispiel darüber auskunft gibt, ob der Digitalwert überhaupt verglichen werden soll oder auch weitere Bedingungen für den Vergleich enthalten kann. In B830 ist dann der Wert 0 eingespeichert um zu kennzeichnen, dass es sich um einen Digitalwert handelt.

Zum Vergleich der zwischengespeicherten digitalen und analogen Signale werden die Reihenfolge der Abspeicherung und ggf. das A-Bit (B730 bzw. B830) sowie die Kennung B720 oder B820 in Verbindung mit dem gewandelten Digitalwert B710 bzw. der Digitalwert B810 geprüft. Es besteht auch die Möglichkeit, z.B. wegen unterschiedlicher Bitbreite, die analogen und die digitalen Signale in getrennten Speichern (zwei FIFOs) unterzubringen. Der Vergleich erfolgt dann ereignisgesteuert: immer wenn ein Wert eines Prozessors zur UVE übertragen wird, wird geprüft, ob die anderen beteiligten Prozessoren einen solchen Wert schon bereitgestellt haben. Sofern das nicht der Fall ist, wird der Wert im entsprechenden FIFO oder Speicher abgelegt, im anderen Fall der Vergleich unmittelbar durchgeführt, wobei auch hier der FIFO als Speicher dienen kann. Ein Vergleich wird zum Beispiel immer dann dann absolviert, wenn die beteiligten FIFOs nicht leer sind. Bei mehr als zwei beteiligten Prozessoren bzw. Vergleichssignalen kann durch ein Voting ermittelt werden, ob alle Signale zur Verteilung zugelassen werden (fail silent Verhalten) oder ob ggf. nur durch ein Error-Signal der Fehlerzustand signalisiert wird.

## Patentansprüche

1. Verfahren zur Umschaltung bei einem Rechnersystem mit einem Umschaltmittel und einem Vergleichsmittel, wobei zwischen wenigstens zwei Betriebsmodi umgeschaltet wird und ein erster Betriebsmodus einem Vergleichsmodus und ein zweiter Betriebs modus einem Performanzmodus entspricht, wobei im Vergleichsmodus Daten der wenigstens zwei Verarbeitungseinheiten miteinander verglichen werden, **dadurch gekennzeichnet, dass** die Daten für den Vergleich zwischengespeichert werden, dass eine Asynchronitätsinformation der wenigstens zwei Verarbeitungseinheiten ermittelt wird, und dass ein Synchronisationssignal auf einen Unterbrechungseingang wenigstens einer der Verarbeitungseinheiten gelegt wird, wenn die Asynchronitätsinformation im Vergleichsmodus einen Schwellwert überschreitet.

2. Verfahren nach Anspruch 1, **dadurch gekennzeichnet, dass** die Asynchronitätsinformation dadurch ermittelt wird, dass ein Füllstand des Speichers für die Zwischenspeicherung der Daten mit einem vorgebbaren maximalen Füllstand verglichen wird.

3. Verfahren nach Anspruch 1, **dadurch gekennzeichnet, dass** aus der Zeit für die wenigstens eines der Daten zwischengespeichert wird, die Asynchronitätsinformation, insbesondere ein Zeitfehler, ermittelbar ist.

4. Verfahren nach Anspruch 1, **dadurch gekennzeichnet, dass** es sich bei dem Synchronisationssignal um ein Verzögerungssignal, insbesondere ein Wait-Signal, handelt.

5. Verfahren nach Anspruch 4, **dadurch gekennzeichnet, dass** durch das Synchronisationssignal wenigstens eine Verarbeitungseinheit veranlasst wird, keine Information mehr zu verarbeiten.

6. Verfahren nach Anspruch 1, **dadurch gekennzeichnet, dass** das Synchronisationssignal gegenüber wenigstens einem Unterbrechungssignal eine höhere Priorität besitzt.

7. Verfahren nach Anspruch 1, **dadurch gekennzeichnet, dass** das Synchronisationssignal gegenüber allen Unterbrechungssignalen die höchste Priorität besitzt.

8. Verfahren nach Anspruch 1, **dadurch gekennzeichnet, dass** durch das Synchronisationssignal wenigstens eine Verarbeitungseinheit dazu veranlasst wird, eine Unterbrechungsroutine abzuarbeiten.

9. Verfahren nach Anspruch 1, **dadurch gekennzeichnet, dass** einem Datum, das verglichen werden soll, eine Kennung zugeordnet wird, durch die der Vergleich ausgelöst wird.

10. Vorrichtung zur Umschaltung bei einem Rechnersystem mit wobei die Vorrichtung ein Umschaltmittel und ein Vergleichsmittel enthält und zwischen wenigstens zwei Betriebsmodi umgeschaltet wird und ein erster Betriebsmodus einem Vergleichsmodus und ein zweiter Betriebsmodus einem Performanzmodus entspricht, wobei im Vergleichsmodus Informationen der wenigstens zwei Verarbeitungseinheiten miteinander werden, **dadurch gekennzeichnet, dass** wenigstens ein Pufferspeicher vorgesehen ist, dass die Vorrichtung derart ausgestaltet ist, dass eine Asynchronitätsinformation der wenigstens zwei Verarbeitungseinheiten ermittelt wird, und dass im Vergleichsmodus ein Synchronisationssignal auf einen Unterbrechungseingang wenigstens einer der Verarbeitungseinheiten gelegt wird, wenn die Asynchronitätsinformation im Vergleichsmodus einen Schwellwert überschreitet.

11. Vorrichtung nach Anspruch 15, **dadurch gekennzeichnet, dass** die Vergleichsmittel und die Umschaltmittel baulich extern zu den Verarbeitungseinheiten vorgesehen sind

12. Vorrichtung nach Anspruch 10, **dadurch gekennzeichnet, dass** es sich bei dem Pufferspeicher um einen FIFO Speicher handelt.

13. Vorrichtung nach Anspruch 10, **dadurch gekennzeichnet, dass** jeder Verarbeitungseinheit ein Pufferspeicher zugeordnet ist.

14. Vorrichtung nach Anspruch 10, **dadurch gekennzeichnet, dass** jeder Verarbeitungseinheit eine Pufferspeicher, insbesondere ein FIFO Speicher zugeordnet ist.

15. Vorrichtung nach Anspruch 10, **dadurch gekennzeichnet, dass** Mittel, insbesondere ein Zählelement, vorgesehen sind, welche derart ausgestaltet sind, dass diese aus der vorgebbaren und/oder ermittelbaren Zeit für die wenigstens eine der Informationen zwischengespeichert wird die Asynchronitätsinformation, insbesondere einen Zeitfehler, ermitteln.

16. Vorrichtung nach Anspruch 10, **dadurch gekennzeichnet, dass** Mittel vorgesehen sind, welche derart ausgestaltet sind, dass diese bei dem Pufferspeicher einen Füllstand des Speichers ermitteln, der anzeigt welche Anzahl an Informationen sich im Pufferspeicher befinden.

**17.** Vorrichtung nach Anspruch 16, **dadurch gekennzeichnet, dass** die Mittel derart ausgestaltet sind, dass diese die Asynchronitätsinformation dadurch ermitteln, dass der ermittelte Füllstand mit einem vorgebbaren maximalen Füllstand verglichen wird.

**18.** Vorrichtung nach Anspruch 15 oder 17, **dadurch gekennzeichnet, dass** Synchronisationsmittel vorgesehen sind, die derart ausgestaltet sind, dass diese abhängig von der Asynchronitätsinformation eine Synchronisationsinformation erzeugen.

**19.** Vorrichtung nach Anspruch 15 oder 17, **dadurch gekennzeichnet, dass** ein Überwachungsmittel vorgesehen ist, welches derart ausgestattet ist, dass dieses die Asynchronitätsinformation verarbeitet.

**20.** Vorrichtung nach Anspruch 19, **dadurch gekennzeichnet, dass** es sich bei dem Überwachungsmittel um ein zum Rechnersystem externes Überwachungsmittel, insbesondere einen Watchdog, handelt

**Claims**

**1.** Changeover method in a computer system having at least two processing units, a changeover means and a comparison means, a changeover being made between at least two modes of operation and a first mode of operation corresponding to a comparison mode and a second mode of operation corresponding to a performance mode, data of the at least two processing units being compared with one another in the comparison mode, **characterized in that** the data for the comparison are buffered, **in that** an item of asynchronicity information for the at least two processing units is determined, and **in that** a synchronization signal is applied to an interrupt input of at least one of the processing units if the asynchronicity information exceeds a threshold value in the comparison mode.

**2.** Method according to Claim 1, **characterized in that** the asynchronicity information is determined by comparing a filling level of the memory for buffering the data with a predefinable maximum filling level.

**3.** Method according to Claim 1, **characterized in that** the asynchronicity information, in particular a time error, can be determined from the time for which at least one of the data items is buffered.

**4.** Method according to Claim 1, **characterized in that** the synchronization signal is a delay signal, in particular a wait signal.

**5.** Method according to Claim 4, **characterized in that** the synchronization signal causes at least one processing unit to no longer process information.

**6.** Method according to Claim 1, **characterized in that** the synchronization signal has a higher priority than at least one interrupt signal.

**7.** Method according to Claim 1, **characterized in that** the synchronization signal has the highest priority over all interrupt signals.

**8.** Method according to Claim 1, **characterized in that** the synchronization signal causes at least one processing unit to execute an interrupt routine.

**9.** Method according to Claim 1, **characterized in that** a data item which is intended to be compared is assigned an identifier which is used to trigger the comparison.

**10.** Changeover device in a computer system having at least two processing units, the apparatus containing a changeover means and a comparison means, and a changeover being made between at least two modes of operation and a first mode of operation corresponding to a comparison mode and a second mode of operation corresponding to a performance mode, information of the at least two processing units being compared with one another in the comparison mode, **characterized in that** at least one buffer memory is provided, **in that** the apparatus is configured in such a manner that an item of asynchronicity information for the at least two processing units is determined, and **in that**, in the comparison mode, a synchronization signal is applied to an interrupt input of at least one of the processing units if the asynchronicity information exceeds a threshold value in the comparison mode.

**11.** Device according to Claim 10, **characterized in that** the comparison means and the changeover means are structurally provided outside the processing units.

**12.** Device according to Claim 10, **characterized in that** the buffer memory is an FIFO memory.

**13.** Device according to Claim 10, **characterized in that** each processing unit is assigned a buffer memory.

**14.** Device according to Claim 10, **characterized in that** each processing unit is assigned a buffer memory, in particular an FIFO memory.

**15.** Device according to Claim 10, **characterized in that** means, in particular a counting element, are provided and are configured in such a manner that they determine the asynchronicity information, in particular a time error, from the predefinable and/or determinable time for which at least one of the items of information is buffered.

**16.** Device according to Claim 10, **characterized in that** means are provided and are configured in such a manner that they determine a filling level of the buffer memory, which filling level indicates the number of items of information in the buffer memory.

**17.** Device according to Claim 16, **characterized in that** the means are configured in such a manner that they determine the asynchronicity information by comparing the determined filling level with a predefinable maximum filling level.

**18.** Device according to Claim 15 or 17, **characterized in that** synchronization means are provided and are configured in such a manner that they produce an item of synchronization information on the basis of the asynchronicity information.

**19.** Device according to Claim 15 or 17, **characterized in that** a monitoring means is provided and is configured in such a manner that it processes the asynchronicity information.

**20.** Device according to Claim 19, **characterized in that** the monitoring means is a monitoring means which is outside the computer system, in particular a watchdog.


**Revendications**

**1.** Procédé de permutation sur un système informatique comprenant au moins deux unités de traitement, un moyen de permutation et un moyen de comparaison, la permutation s'effectuant entre au moins deux modes de fonctionnement et un premier mode de fonctionnement correspondant à un mode de comparaison alors qu'un deuxième mode de fonctionnement correspond à un mode de performances, les données des au moins deux unités de traitement étant comparées en mode de comparaison, **caractérisé en ce que** les données destinées à la comparaison sont stockées temporairement, qu'une information d'asynchronisme des au moins deux unités de traitement est déterminée et qu'un signal de synchronisation est appliqué à une entrée d'interruption d'au moins l'une des unités de traitement lorsque l'information d'asynchronisme en mode de comparaison dépasse une valeur de seuil.

**2.** Procédé selon la revendication 1, **caractérisé en ce que** l'information d'asynchronisme est déterminée en comparant un niveau de remplissage de la mémoire destinée au stockage temporaire des données avec un niveau de remplissage maximum à prédéfinir.

**3.** Procédé selon la revendication 1, **caractérisé en ce que** l'information d'asynchronisme, notamment une erreur de temps, peut être déterminée à partir de la durée pendant laquelle l'au moins une des données est stockée temporairement.

**4.** Procédé selon la revendication 1, **caractérisé en ce que** le signal de synchronisation est un signal de retard, notamment un signal d'attente.

**5.** Procédé selon la revendication 4, **caractérisé en ce que** le signal de synchronisation commande à au moins une unité de traitement de ne plus traiter d'informations.

**6.** Procédé selon la revendication 1, **caractérisé en ce que** le signal de synchronisation possède une priorité supérieure à celle d'au moins un signal d'interruption.

**7.** Procédé selon la revendication 1, **caractérisé en ce que** le signal de synchronisation possède une priorité supérieure à celle de tous les signaux d'interruption.

**8.** Procédé selon la revendication 1, **caractérisé en ce que** le signal de synchronisation commande à au moins une unité de traitement d'exécuter une routine d'interruption.

**9.** Procédé selon la revendication 1, **caractérisé en ce qu'**à une date qui doit être comparée est affecté un identifiant par le biais duquel est déclenchée la comparaison.

**10.** Dispositif de permutation sur un système informatique comprenant au moins deux unités de traitement, le dispositif comprenant un moyen de permutation et un moyen de comparaison et la permutation s'effectuant entre au moins deux modes de fonctionnement et un premier mode de fonctionnement correspondant à un mode de comparaison alors qu'un deuxième mode de fonctionnement correspond à un mode de performances, des informations des au moins deux unités de traitement étant comparées en mode de comparaison, **caractérisé en ce qu'**il est prévu au moins une mémoire tampon, que le dispositif est configuré de telle sorte qu'une information d'asynchronisme des au moins deux unités de traitement est déterminée et qu'en mode de comparaison, un signal de synchronisation est appliqué à une entrée d'interruption d'au moins l'une des unités de traitement lorsque l'information d'asynchronisme en mode de comparaison dépasse une valeur de seuil.

**11.** Dispositif selon la revendication 10, **caractérisé en ce que** le moyen de comparaison et le moyen de permutation sont prévus par la construction à l'extérieur des unités de traitement.

**12.** Dispositif selon la revendication 10, **caractérisé en ce que** la mémoire tampon est une mémoire FIFO.

**13.** Dispositif selon la revendication 10, **caractérisé en ce qu'**une mémoire tampon est affectée à chaque unité de traitement.

**14.** Dispositif selon la revendication 10, **caractérisé en ce qu'**une mémoire tampon, notamment une mémoire FIFO, est affectée à chaque unité de traitement.

**15.** Dispositif selon la revendication 10, **caractérisé en ce que** sont prévus des moyens, notamment un élément compteur, lesquels sont configurés de telle sorte que ceux-ci déterminent une information d'asynchronisme, notamment une erreur de temps, à partir de la durée à prédéfinir et/ou à prédéterminer pendant laquelle est enregistrée temporairement l'au moins une des informations.

**16.** Dispositif selon la revendication 10, **caractérisé en ce que** des moyens sont prévus, lesquels sont configurés de telle sorte qu'ils déterminent un niveau de remplissage de la mémoire tampon, lequel indique le nombre d'informations qui se trouvent dans la mémoire tampon.

**17.** Dispositif selon la revendication 16, **caractérisé en ce que** les moyens sont configurés de telle sorte qu'ils déterminent l'information d'asynchronisme en comparant le niveau de remplissage déterminé avec un niveau de remplissage maximum à prédéfinir.

**18.** Dispositif selon la revendication 15 ou 17, **caractérisé en ce que** des moyens de synchronisation sont prévus, lesquels sont configurés de telle sorte qu'ils génèrent une information de synchronisation en fonction de l'information d'asynchronisme.

**19.** Dispositif selon la revendication 15 ou 17, **caractérisé en ce qu'**il est prévu un moyen de surveillance, lequel est configuré de telle sorte qu'il traite l'information d'asynchronisme.

**20.** Dispositif selon la revendication 19, **caractérisé en ce que** le moyen de surveillance est un moyen de surveillance externe au système informatique, notamment un chien de garde.

**Figur 1**

M510

M500

M511

M520

M530

**Figur 1a**

M651

M610                                                    M600

M611

M640        M650

M630

M620

**Figur 1c**

N141

N140

N142

N143

N14n

N110

N120

N100

N163

N160

N16n

N162

N161

**Figur 1b**

Figur 2

**Figur 3**

M390    - - - - - - -    M39n

M380                    M350  M35        M38n

M310                                    M31n

M330                                    M33n

M340                                    M34n

M320                                    M32n

M360                                    M36n

M369        M379

M370                    M37n

M300

**Figur 4**

M350 M35n
M340 M34n
M330 M440, M33n
M441,
...
M44n
M300
M320 M32n
M450 M45n
M410, M411 M400
M470 M47n
M420 M430
M360 M36n
M369 M379
M370 M37n

Figur 5

**Figur 6**

Q100

Q110
Q111

Q112

Q120

Figur 7

Figur 8

M820

M800

M830

M840

Figur 9

**Figur 10**

**Figur 11**

**Figur 12**

B321

B170

B301

B311

B303 B390

B342

B300

B180 B302

B331

**Figur 13**

Figur 14

Figur 15

B730    B720        B710

**Figur 16**

B830          B820                B810

**Figur 17**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0969373 A2
- US 3783250 A
- DE 19809089 A1

### In der Beschreibung aufgeführte Nicht-Patentliteratur

- **URBAN et al.** A survivable avioncs system for space applications. *Int. Symposium on Fault-tolerant Computing,* 1998, vol. FTCS-28, 372-381